# EUROPEAN PATENT SPECIFICATION

(11) **EP 3 939 686 B1**
(45) Date of publication and mention of the grant of the patent: **06.03.2024**
(21) Application number: 21185263.7
(22) Date of filing: 13.07.2021
(51) Int. Cl.: B01D 46/00, B01D 46/24, B01D 46/44

(54) **AIR CLEANER**
LUFTREINIGER
ÉPURATEUR D'AIR

(30) Priority: 13.07.2020 KR 20200085990
(43) Date of publication of application: 19.01.2022
(73) Proprietor: LG Electronics Inc., Seoul 07336 (KR)
(72) Inventor: PARK, Dongryul, 08592 Seoul (KR); YOON, Juhyup, 08592 Seoul (KR); LEE, Jongsu, 08592 Seoul (KR); LEE, Nuree, 08592 Seoul (KR); GIM, Yeonghyeon, 08592 Seoul (KR)
(74) Representative: Vossius & Partner Patentanwälte Rechtsanwälte mbB

(56) References cited:
- CN-U- 204 261 993
- JP-A- H1 089 743
- JP-A- H02 198 608
- US-A- 5 980 755
- US-A1- 2019 128 549

## Description

The present disclosure relates to an air cleaner, and more particularly to a sensor for indicating a filter replacement period in the air cleaner.

An air cleaner is a device that draws in contaminated air and performs a series of air cleaning operations to supply purified air.

In order to filter out foreign substances contained in the air, a filter is provided inside a case forming the exterior of the air cleaner, and the air, from which foreign substances are removed by passing through the filter, flows to a blower fan.

However, as the filter is disposed in the case, a collected amount of foreign substances is not visible from the outside even when excessive amounts of foreign substances are collected in the filter, thereby causing a problem in that a filter replacement period is delayed.

Further, if excessive amounts of foreign substances are collected in the filter, the filter may cause a decrease in the volume of air flow generated by the blower fan, or may cause an excessive load on the blower fan, thus degrading overall air blowing performance of the air cleaner.

Korean Patent No. 10-2040834 discloses a method of indicating a filter replacement timing by using a differential pressure sensor, in which the filter replacement timing is determined based on pressure values sensed by the differential pressure sensor. However, the method has a problem in that an arrangement structure of the differential pressure sensor is not specified.

Korean Patent No. 10-0666529 discloses an air cleaner having a differential pressure sensor disposed therein. However, the air cleaner has problems in that the differential pressure sensor occupies a larger space inside the air cleaner, and the structure of the differential pressure sensor may disrupt the air flow.

US 2019/128549 A1 discloses a ventilation system where the graphical user interface includes an input for a measured differential pressure of a clean filter.

The present invention is disclosed in the appended set of claims. It is an object of the present disclosure to provide an air cleaner indicating a filter replacement period.

It is another object of the present disclosure to provide an air cleaner in which a pressure sensor has a simplified structure.

It is yet another object of the present disclosure to provide an air cleaner in which a pressure sensor has improved sensing capabilities.

It is still another object of the present disclosure to provide an air cleaner manufactured in a compact size with less wasted space.

It is still another object of the present disclosure to provide an air cleaner in which a pressure sensor is stably supported.

It is still another object of the present disclosure to provide an air cleaner in which flow resistance, caused by the arrangement of a pressure sensor, is minimized.

The objects of the present disclosure are not limited to the aforementioned objects and other objects not described herein will be clearly understood by those skilled in the art from the following description.

The invention defined in the appended independent claim solves the above-identified problems and thus achieves the objects identified above. Preferred aspects of the invention are defined by the appended dependent claims.

According to the present disclosure in the following description, there is provided an air cleaner which includes: cases comprising air inlets, air outlets, and blower fans disposed therein; filters configured to filter out foreign substances contained in air suctioned through the air inlets; a first tube disposed on a downstream side of the filters and having a first hole being open toward the filters; a second tube disposed on the downstream side of the filters and having a second hole being open in a direction opposite the filters; and a pressure sensor being coupled to the first tube and the second tube and configured to measure air pressure in the first tube and the second tube, respectively. Accordingly, the air cleaner may accurately determine a replacement period of the filters based on pressure values measured by the pressure sensor.

The first tube and the second tube may be integrally formed with each other, such that by measuring static pressure and dynamic pressure at the same time, accuracy of the measured values may be improved.

The pressure sensor may be disposed at a position not exposed to a discharge flow passage, through which air having passed through the filters flows toward the air outlets, thereby minimizing an effect of the pressure sensor on the air flow.

The pressure sensor may be disposed at a position spaced apart from an air quality detector for measuring an amount of foreign substances contained in the air flowing through the air inlets, thereby minimizing an effect of the air quality detector on the pressure sensor.

The first tube and the second tube may be coupled to each other by an adaptor. Terminals of the pressure sensor may be inserted into the adapter, such that the terminals of the pressure sensor may be stably coupled to the first tube and the second tube.

The adaptor may include: a base plate having terminal holes, into which the terminals of the pressure sensor are inserted; and a receptor protruding from the base plate, such that the pressure sensor and the tubes may be stabled coupled to each other.

The first tube may be coupled to the pressure sensor at a position upwardly spaced apart from a lower end of the adaptor, thereby reducing resistance to air flowing into the first tube.

The pressure sensor may be disposed at the filter frames, in which the filters are disposed, such that the pressure sensor may be stably supported by the filter frames.

The filter frames may have a partition wall which extends in a circumferential direction of the filters, and through which the first tube passes, such that the first tube may be stably supported by the partition wall. The partition wall may be disposed between the pressure sensor and the discharge flow passage.

With respect to the partition wall, the first tube may be disposed inside of the partition wall, and the pressure sensor may be disposed outside of the partition wall, such that the pressure sensor and the first tube may be stably coupled to each other by the partition wall.

The partition wall may have support surfaces, on which the first tube is mounted, such that the first tube may be supported by the support surfaces.

The filter frames may have fences coming into contact with an outer circumferential surface of the pressure sensor, thereby preventing the pressure sensor from shaking.

The filter frames may have a low boss protruding toward the pressure sensor; and the pressure sensor may have boss grooves into which the low boss is inserted, such that the pressure sensor may be fixed to the filter frames.

The fences may come into contact with an outer circumferential surface of the pressure sensor on the outside of the low boss, such that the pressure sensor may be stably fixed by the low boss and the fences.

The first tube may be disposed between fan housings, which are disposed over the filter frames and in which the blower fans are disposed. The first tube may be disposed at a position where load of the filters may be accurately measured.

The fan housings may have a holding wall extending downwardly and inserted into a cut-out groove formed at an upper side of the filter frames, such that the first tube may be pressed by the cut-out groove and the holding wall.

The fan housings may be coupled to the filter frames to form a through hole, into which the first tube is inserted, such that the through hole of the first tube may be formed by coupling of the filter frames and the fan housings.

The fan housings may have an upper boss protruding toward the pressure sensor, thereby stably fixing the first tube.

The pressure sensor may be connected to a display displaying a replacement period of the filters, such that the replacement period of the filters may be displayed on the display.

Other detailed matters of the exemplary embodiments are included in the detailed description and the drawings.

The air cleaner according to the present disclosure has one or more of the following effects.

Firstly, a filter replacement period may be determined based on pressure values measured by the pressure sensor.

Secondly, sensing capabilities of the pressure sensor may be improved with a structure of a pair of tubes measuring static pressure and dynamic pressure, respectively.

Thirdly, the pair of tubes are provided in an integrated structure or an assembled structure, thereby simplifying a pressure sensing structure.

Fourthly, by separating the pressure sensor and the tubes by a partition wall, sensing accuracy of the pressure sensor may be improved.

Fifthly, by providing a pressure sensor in a wasted space of the filter frames, a compact sensing structure may be provided.

Sixthly, the pressure sensor may be fixed stably and reliably by providing a structure such as fences or bosses.

Seventhly, the tubes and the pressure sensor may be coupled stably and reliably by a support member and a holding member formed in the partition wall.

Eighthly, by providing the pressure sensor at a position not exposed to an air flow, flow resistance may be reduced.

The effects of the present disclosure are not limited to the aforesaid, and other effects not described herein will be clearly understood by those skilled in the art from the following description of the appended claims.

### BRIEF DESCRIPTION OF THE DRAWINGS

FIG. 1 is a perspective view of an air cleaner according to the present disclosure.
FIG. 2 is a longitudinal sectional view of an air cleaner according to the present disclosure.
FIG. 3 is an exploded perspective view of a lower blower according to the present disclosure.
FIG. 4 is a diagram illustrating a structure of a pressure sensor assembled to filter frames according to the present disclosure.
FIG. 5 is a top perspective view of the structure illustrated in FIG. 4.
FIG. 6 is a diagram illustrating a structure in which a pressure sensor and tubes are assembled to each other according to the present disclosure.
FIG. 7 is a diagram illustrating a structure in which a pressure sensor and tubes are separated from each other.
FIG. 8 is a diagram illustrating a structure of filter frames to which a pressure sensor is fixed, according to the present disclosure.
FIG. 9 is top and bottom perspective views of fan housings according to the present disclosure.
FIG. 10 is a diagram illustrating a structure of fan housings to which a pressure sensor is fixed, according to the present disclosure.
FIG. 11 is a diagram illustrating a structure in which filter frames, a sensor assembly, and fan housings are coupled to each other, according to the present disclosure.
FIG. 12 is a longitudinal sectional view of the fixed sensor assembly illustrated in FIG. 11.
FIG. 13 is a block diagram explaining a process of displaying a filter replacement period based on values measured by a pressure sensor, according to the present disclosure.
FIG. 14 is a front view of an air cleaner according to another embodiment of the present disclosure.

Advantages and features of the present disclosure and methods of accomplishing the same will be more clearly understood from exemplary embodiments described below with reference to the accompanying drawings. However, the present disclosure is not limited to the following embodiments but may be implemented in various different forms. The embodiments are provided only to complete disclosure of the present disclosure and to fully provide a person having ordinary skill in the art to which the present disclosure pertains with the category of the present disclosure, and the present disclosure will be defined by the scope of the appended claims. Wherever possible, like reference numerals generally denote like elements through the specification.

Hereinafter, embodiments of the present disclosure will be described with reference to the accompanying drawings for explaining the air cleaner.

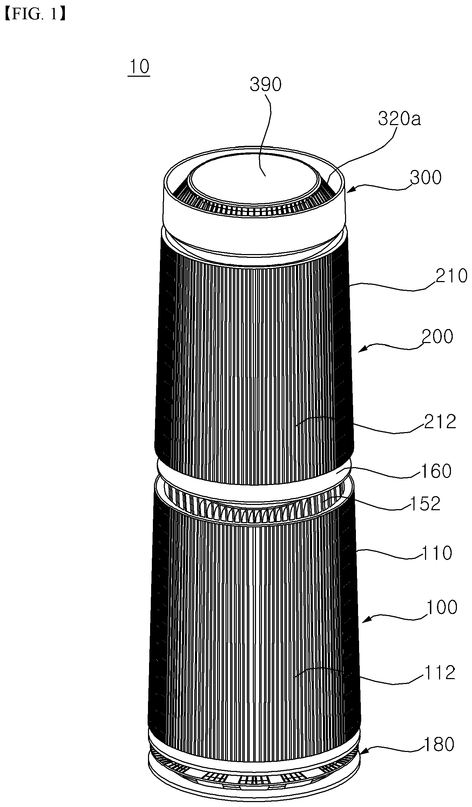

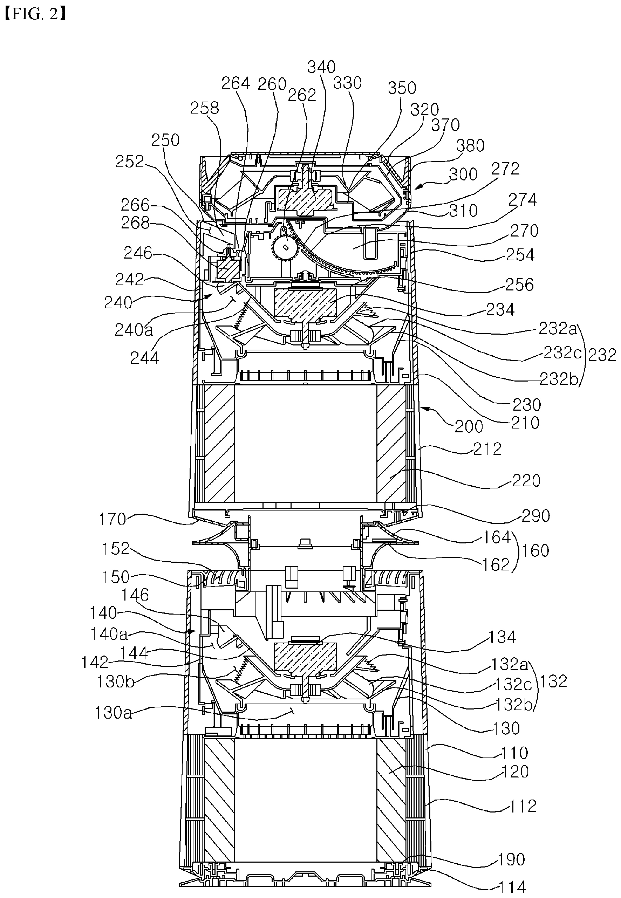

Referring to FIGS. 1 and 2, the overall configuration of the air cleaner 10 will be descried below. FIG. 1 is a perspective view of the air cleaner 10 as seen from above, and FIG. 2 is a longitudinal sectional view of an internal structure of the air cleaner 10.

The air cleaner 10 includes blower units 100 and 200 for generating an air flow. The air cleaner 10 further comprises a circulator 300 for changing a discharge direction of the air flow generated by the blower units 100 and 200. The blower units 100 and 200 may include a lower blower unit 100 for discharging clean air to a relatively lower region, and an upper blower unit 200 for discharging clean air to a relatively upper region.

The lower blower unit 100 and the upper blower unit 200 may be disposed in a vertical direction, and the upper blower unit 200 may be upwardly spaced apart from the lower blower unit 100.

The air cleaner 10 may include cases 110 and 210 forming the exterior of the blower units 100 and 200. The cases 110 and 210 may include a lower case 110 forming the exterior of the lower blower unit 110, and an upper case 210 forming the exterior of the upper blower unit 200.

The lower case 110 may have an overall cylindrical shape and may have a diameter which is smaller at the top than at the bottom.

The lower case 110 has a first suction port 112 through which air is suctioned. The first suction port 112 may be referred to as an air inlet 112 through which outside air flows into the lower case 110. A plurality of first suction ports 112 may be formed along a circumferential surface of the lower case 110, and may be open from top to bottom. A first discharge port 152, through which the suctioned air is discharged to the outside, is formed at the upper part of the lower case 110, and the first discharge port 152 may be open upwardly. The first discharge port 152 may be referred to as an air outlet 152, through which air in the lower case 110 is discharged to the outside.

The plurality of first suction ports 112 may be arranged evenly in a circumferential direction of the lower case 110, so that air may be suctioned radially in all directions relative to the lower case 110.

A first discharge cover 150, forming the first discharge port 152, may be disposed at the upper part of the lower blower unit 100. The first discharge cover 150 may be referred to as a discharge guider 150 for guiding a flow direction of air, which flows upward, to a predetermined discharge direction.

A first filter 120 is removably disposed in the lower case 110. The first filter 120 may have a cylindrical shape, and may filter out foreign substances, contained in the suctioned air, through an outer circumferential surface of the first filter 120.

A first filter frame 190 may provide a space, in which the first filter 120 may be removably disposed, and may be disposed on the outside of the first filter 120. The first 120 may be supported by the first filter frame 190, and the first filter frame 190 may define a mounting space for mounting the first filter 120.

A first fan housing 130 may be disposed at the upper part of the first filter 120. The first fan housing 130 may include a first fan 132 being rotatably disposed therein, and a first fan motor 134 supplying power to the first fan 132.

A first housing suction hole 130a may be formed at a lower part of the first fan housing 130. The first housing suction hole 130a may have a circular shape, and air passing through the first filter 120 may be suctioned into the first housing suction hole 130a. A first housing discharge hole 130b may be formed at an upper part of the first fan housing 130. Air blown by the first fan 132 may flow through the first housing discharge hole 130b. A mixed flow fan may be used as the first fan 132, and air blown by the first fan 132 may flow radially outward and upward.

The first fan 132 may include: a first hub 132a to which a rotating shaft of the first fan motor 134 is coupled; a first shroud 132b being spaced apart from the first hub 132a; and a plurality of first blades 132c disposed between the first hub 132a and the first shroud 132b. The first fan motor 132 may be coupled to the upper part of the first fan 132.

A first blowing guider 140 for guiding the air, blown by the first fan 132, may be disposed at the upper part of the first fan 132.

The first blowing guider 140 may form an annular first air-blowing passage 140a, through which the air blown by the first fan 132 flows.

The first blowing guider 140 may include: a first blower body 142 having a cylindrical shape and forming an exterior thereof; a bowl-shaped first motor cover 144 which is disposed at a center portion of the first blower body 142 and into which the first fan motor 134 is inserted; and a plurality of first guide vanes 146 being spaced apart from each other in a circumferential direction on the first air-blowing passage 140a disposed between the first blower body 142 and the first motor cover 144.

The plurality of first guide vanes 146 may upwardly guide air discharged from the first fan 132 to the first air-blowing passage 140a. The respective first guide vanes 146 may be formed in the shape of curved ribs standing upright so as to be close to the vertical axis direction. The first guide vanes 146 may extend from an outer circumferential surface of the first motor cover 144 to an inner circumferential surface of the first blower body 142, and the plurality of first guide vanes 146 may be spaced apart from each other.

A rotating shaft of the first fan motor 134 may extend downwardly from the first fan motor 134, and may pass through a bottom surface of the first motor cover 144 to be coupled to the first hub 132a.

A base 180, coming into contact with the ground, may be disposed at the lower part of the lower case 110. The base 180 may be spaced apart downwardly from a lower end of the lower case 110; and a base suction part 114, into which external air is suctioned, may be formed at a separating space between the lower case 110 and the base 180.

A shield body 160 for restricting the upward flow of air, discharged from the discharge guider 150, may be disposed between the lower blower unit 100 and the upper blower unit 200. The upper blower unit 200 may be spaced apart from the upper part of the lower blower unit 100 by the shield body 160.

The shield body 160 may extend along the air outlet 152. In this case, "extending along the air outlet" may be understood as meaning extending in a direction parallel to a direction in which the air outlet 152 is formed. Accordingly, the shield body 160 may extend from a position spaced apart from the upper part of the air outlet 152, in a direction parallel to the direction the air outlet 152 is formed.

The shield body 160 may block air, discharged from the lower blower unit 100, from flowing into a second suction port 212 of the upper blower unit 200.

The shield body 160 may include a stem 162 coupled to the lower case 110 and extending upward, and a loop 164 disposed above the stem 162. The stem 162 may extend to be rounded upward, and the loop 164 may extend to be rounded downward. The stem 162 may extend upward from the discharge guider 150, and at least a portion of the stem 162 may be formed with a curved surface having a predetermined radius of curvature.

The discharge guider 150 of the lower blower unit 100 may be disposed below the shield body 160, and a support plate 170, on which the upper blower unit 200 is seated, may be disposed above the shield body 160.

The support plate 170 may have an annular shape and may extend to be rounded upward from an inner circumferential surface toward an outer circumferential surface.

The upper case 210 may have an overall cylindrical shape and may have a diameter which is smaller at the top than at the bottom. The upper case 210 has the second suction port 212, through which external air is suctioned. The second suction port 212 may be open from top to bottom, and a plurality of second suction ports 212 may be spaced apart from each other in a circumferential direction.

In the upper blower unit 200, a second filter 220 may be disposed in the second filter frame 290. The description of the first filter 120 and the first filter frame 190 may also apply equally to the second filter 220 and the second filter frame 290. The filter 120 and the second filter 220 may be equally referred to as a "filter," and the first filter frame 190 and the second filter frame 290 may be equally referred to as a "filter frame."

The upper blower unit 200 may include a second fan 232 disposed above the second filter 220 and blowing the suctioned air, and a second fan motor 234 supplying power to the second fan 232, and a second fan housing 230 receiving the second fan 232. The second fan 232, the second fan motor 234, and the second fan housing 230 may have the same shape and perform the same function as the first fan 132, the first fan motor 134, and the first fan housing 130. The second fan 232 may be a mixed flow fan, and may include a hub 232a, a shroud 232b, and a plurality of blades 232c, as in the first fan 132.

The upper blower unit 200 may further include a second blowing guider 240 disposed above the second fan 232, and upwardly guiding air blown by the second fan 232. The second blowing guider 240 may include a second blower body 242 having a cylindrical shape and forming an exterior thereof, and a bowl-shaped second motor cover 244 which is disposed at a center portion of the second blower body 242 and into which the second fan motor 234 is inserted. A plurality of second guide vanes 246 spaced apart from each other in a circumferential direction on a second air-blowing passage 240a are formed between the second blower body 242 and the second motor cover 244. The second blower body 242, the second motor cover 244, and the plurality of second guide vanes 246 may have the same shape and perform the same function as the first blower body 142, the first motor cover 144, and the plurality of first guide vanes 146.

A second discharge cover 250, forming a second discharge port 252 which is open upwardly, may be disposed at the upper part of the upper blower unit 200. The second discharge port 252 may have an annular shape, and a second discharge grill 258 which is radially formed may be disposed at the second discharge cover 250.

The second discharge cover 250 may include a second cover wall 254 having a circumference of a cylindrical shape, a guide base 256 disposed on the inside of the second cover wall 254, and the second discharge grill 258 extending radially from the guide base 256 to the second cover wall 254.

The upper blower unit 200 may include a moving guider 260 rotatably disposed at the guide base 256 and supporting the circulator 300, and a mover 270 moving along the moving guider 260 and changing an inclination angle of the circulator 300.

The moving guider 260 may be disposed at an upper part of the guide base 256 and may be rotatably disposed at the guide base 256.

The guide base 256 may have a disk shape, and the second discharge grill 258 may be disposed around the circumference thereof. The moving guider 260 may have a space formed on the inside thereof, on which a moving gear 262 and a gear motor (not shown) are disposed.

While being coupled to the circulator 300, the mover 270 may move along the moving guider 260 to change an inclination angle of the circulator 300. The mover 270 may include a guide plate 272 being convex toward the moving guider 260, and a gear rail 274 being engaged with the moving gear 262.

The mover 270 is coupled to a lower surface of the circulator 300, such that a portion of a suction port 310a, formed at a lower part of the circulator 300, may be shielded.

An external gear 264 may be formed on one side of the moving guider 260 along a circumferential surface thereof; and a pinion gear 266, rotating while being engaged with the external gear 264, and a motor 268 rotating the pinion gear 266 may be disposed on one side of the second discharge grill 258.

As the moving gear 262 and the gear rail 274 rotate while being engaged with each other, an inclination angle of the circulator 300 may be changed with respect to a vertical axis. As the external gear 264 and the pinion gear 266 rotate while being engaged with each other, the circulator 300 may rotate in a circumferential direction with respect to a vertical axis as a rotation axis.

The circulator 300 is disposed at the upper part of the upper blower unit 200 to change a direction of air discharged upward from the upper blower unit 200. The circulator 300 may be disposed in parallel or at an incline to a plane formed by the second discharge port 252.

The circulator 300 may have a third discharge port 320a having an annular shape, and air discharged from the upper blower unit 200 and flowing into the circulator 300 may be discharged to the outside through the third discharge port 320a.

A display 390 for displaying operating information of the air cleaner 10 may be disposed at the upper part of the circulator 300. The display 390 may be disposed radially inward of the third discharge port 320a and may form an upper surface of the circulator 300.

The circulator 300 may include: a lower cover 310 forming an exterior of the lower part thereof and coupled to the upper blower unit 200; an upper cover 320 forming an exterior of the upper part thereof and disposed above the lower cover 310; a third fan 330 allowing air to flow into the circulator 300; and a fan motor 340 rotating the third fan 330. The circulator 300 may further commprise a motor cover 350 receiving the fan motor 340; a third fan housing 370 receiving the third fan 330; and an outer cover 380 disposed on the outside of the upper cover 320.

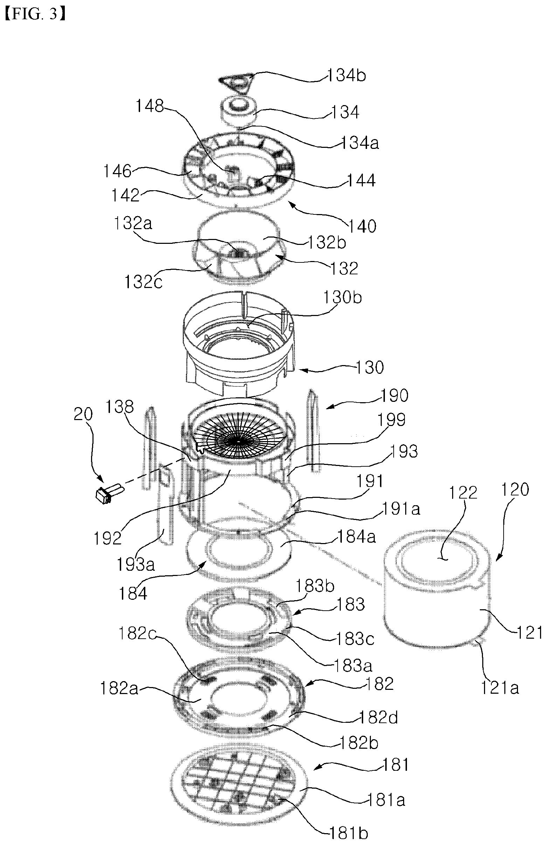

Hereinafter, a detailed structure of the base 180 and the lower blower unit 100 will be described with reference to FIG. 3.

FIG. 3 is a detailed exploded view of the base 180, and components disposed inside the lower blower unit 100.

The base 180 includes a base plate 181 forming a lower side of the base 180; a base grill 182 disposed over the base plate 181; a lever device 183 disposed over the base grill 182; and a support device 184 disposed over the level device 183.

The base plate 181 may include an under plate 181a being in contact with the ground and forming the lower surface of the air cleaner 10; and a base protrusion 181b protruding upward from the under plate 181a. The base protrusion 181b may be formed on both sides of the base plate 181. The under plate 181a and the base grill 182 may be spaced apart from each other by the base protrusion 181b, such that a base suction portion 114 may be formed between the base plate 181 and the base grill 182.

A suction portion 182b having a plurality of suction holes may be formed around the circumference of the base grill 182, and an annular base grill body 182a may extend inward from the circumference. A base grill groove portion 182d may be formed at a portion of the base grill body 182a. The base grill groove portion 182d may be understood as a space where the suction portion 182b is not formed, on the circumference of the base grill 182. Further, a plurality of filter guides 182c for guiding upward or downward movement of the filter 120 may protrude from the upper surface of the base grill body 182a, and may be spaced apart from each other in a circumferential direction.

The filter 120 may have a cylindrical shape surrounded by a filter body 121 and having a filter hole 122 formed inside, and a filter holder 121a may protrude from a lower part of the filter body 121. Air flowing into the filter 120 through an outer circumferential surface of the filter body 121 may pass through the filter body 121, so that foreign substances may be filtered from the air, and then the air may flow upward through the filter hole 122. A user may hold the filter holder 121a to separate the filter 120 from the filter frame 190. The filter body 121 may be a cylindrical filter with a prefilter, a HEPA filter, and/or a deodorant filter being radially stacked in layers.

The lever device 183, disposed over the base grill 182 to be operable by a user, may rotate in a circumferential direction. The lever device 183 may have an annular shape, and may include a lever body 183a forming an overall exterior. A plurality of cut-out portions 183b may be formed at the lever body 183a at positions corresponding to the filter guides 182c. The cut-out portions 183b may be understood as through holes formed at the lever body 183a. The filter guides 182c may be inserted into the cut-out portions 183b to protrude upward of the lever body 183a. A handle 183c may be provided on an outer circumferential surface of the lever body 183a, and the base grill groove portion 182d may provide a space for movement of the handle 183c.

The support device 184 for supporting the filter 120 may be disposed over the lever device 183, and support protrusions (not shown) being in contact with the filter guides 182c may be formed at a lower surface of the support device 184. The support device 184 may include a handle connecting part connected to the handle 183c, and a user may hold the connected handle 183c to rotate the lever device 183 and the support device 184.

The filter guides 182c and the support protrusions (not shown) may have inclined surfaces which are tapered in opposite directions, and the inclined surfaces may come into contact with each other. In this case, when a user rotates the lever device 183 and the support device 184 while holding the handle 183c, the filter guides 182c and the support protrusions (not shown) move along the inclined surfaces thereof, such that the support device 184 may move up and down, thereby allowing an up-down movement of the filter disposed at the upper part of the support device 184, and causing the filter 120 to be removable from the filter frame 190.

The filter frame 190 forming a mounting space of the filter 120 may be disposed over the support device 184. The filter frame 190 may include a lower frame, forming a lower boundary of the filter frame 190, and an upper frame forming an upper boundary of the filter frame 190. A frame recess 191a, which is recessed downward, may be formed at the lower frame 191. The frame recess 191a may be formed at a position corresponding to the base grill groove 182d, to provide a space for rotation of the handle 144. The filter support 193 may extend from the lower frame 191 to the upper frame 192, and a plurality of the filter supports 193 may be spaced apart from each other in a circumferential direction along the edge of the frames 191 and 192. A filter support cover 193a may be coupled to an outer side of the filter supports 193, and the mounting space for mounting the filter 120 may be defined by the frames 191 and 192 and the filter supports 193. The filter 120 may be mounted in the mounting space, and the filter frame 190 may include an air quality detector 199 for measuring an amount of foreign substances in the air suctioned through the air inlet 112.

A sensor assembly 20 for measuring the pressure of air, flowing on the downstream side of the filter 120, is disposed on the downstream side of the filter 120. The sensor assembly 20 may be electrically connected to the display 390 and may determine a replacement period of the filter 120 based on measured pressure values and transmit the determined information to the display 390. The display 390 may display information, transmitted from the sensor assembly 20, so that the information may be exposed to the outside.

A fan housing 130 forming a space for receiving the blower fan 132 may be formed at an exit side of the filter 120. The fan housing 130 may be supported by the filter frame 190, and an ionizer 138 for eliminating/sterilizing contaminants or odor particles in the air may be disposed in the fan housing 130. The ionizer 138 may be supported by the filter frame 190 as the fan housing 130 and the filter frame 190 are coupled to each other.

The blower fan 132 may be received in the fan housing 130. While being coupled to the fan motor 134 via a fan motor rotating shaft 134a, the blower fan 132 may be coupled to the fan motor 134 by a fan motor coupling part 134b. Further, the fan motor coupling part 134b may perform a coupling function to allow the fan motor 134 to be fixed to the blowing guider 140.

The blowing guider 140 may be disposed above the blower fan 132, and may include the cylindrical blower body 142 and the bowl-shaped motor cover 144 disposed on the inside of the blower body 142. An air flow passage 140a may be disposed between the blower body 142 and the motor cover 144, and the bowl-shaped motor cover 144 receiving the fan motor 134 may form an inner boundary of the air flow passage 140a. In this case, the fan motor rotating shaft 134a extends downwardly from the fan motor 134 to pass through a bottom surface of the motor cover 144, and then may be coupled to the blower fan 132. A coupling rib 148, which protrudes upwardly to be coupled to a coupling guide (not shown) disposed at a lower portion of the discharge guider 150, may be formed on an upper surface of the motor cover 144. A plurality of guide vanes 146, extending from the blower body 142 to an outer circumferential surface of the motor cover 144, may be disposed between the blower body 142 and the motor cover 144, and may be spaced apart from each other in a circumferential direction. The guide vanes 146 may guide a flow direction of air passing through the blowing guider 140.

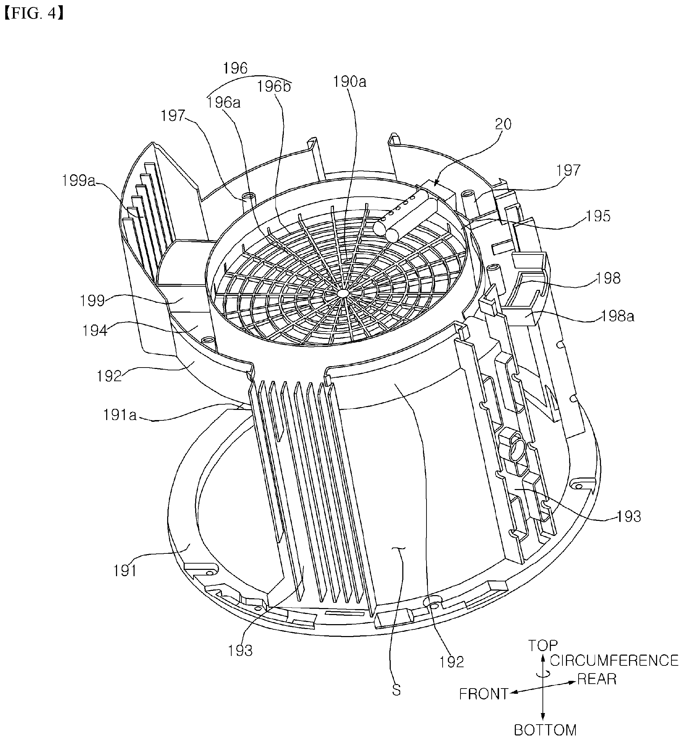

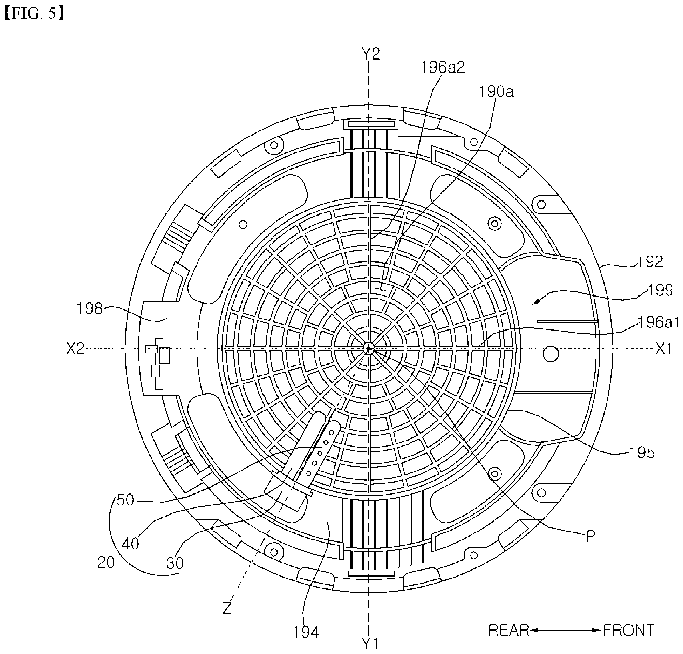

Hereinafter, a structure of the filter frame 190 and an arrangement position of the sensor assembly 20 will be described with reference to FIGS. 4 and 5.

FIG. 4 is a perspective view illustrating a connection relationship between the filter frame 190 and the sensor assembly 20, and FIG. 5 is a top perspective view of the structure illustrated in FIG. 4.

The sensor assembly 20 may be understood as a structure including a pressure sensor 30, a first tube 40, a second tube 50, and an adapter 60 which will be described later. The sensor assembly 20 may have a structure in which the components 30, 40, 50, and 60 are integrally formed with each other, or the respective components 30, 40, 50, and 60 are assembled to the sensor assembly 20.

The filter frame 190 may provide a space S from which the filter 120 is removable. The shape illustrated in FIG. 4 shows that the space S is empty as the filter 120 is removed. The sensor assembly 20 may be disposed over the filter frame 190.

The filter frame 190 may include the lower frame 191 forming a lower side of the filter frame 190, and the upper frame 192 upwardly spaced apart from the lower frame 191, and the plurality of filter supports 193 extending vertically to connect the lower frame 191 and the upper frame 192.

The lower frame 191 may have an overall annular shape and may form a lower surface of the filter frame 190. The support device 184 (see FIG. 3) may be disposed on the inside of the lower frame 191, and an outer circumferential surface of the support device 184 may come into contact with an inner circumferential surface of the lower frame 191 to be supported by the lower frame 191. The support device 184 may be a support plate supporting the lower surface of the filter 120 when the filter 120 is removed from the space S.

The filter support 193 may extend upwardly from the lower frame 191, and may be coupled to the filter support cover 193a (see FIG. 3) to be formed in the shape of a square column. A plurality of filter supports 193 may be spaced apart in a circumferential direction, and four filter supports 193 may be provided. The filter supports 193 may be disposed intensively on a rear side of the filter frame 190 instead of a front side thereof where the filter 120 is introduced. Accordingly, the filter 120 may be introduced into the filter frame 180 from the front side toward the rear side, such that a rearward movement of the filter 120 may be restricted by the filter supports 193 disposed at the rear side.

The upper frame 192 may be coupled to the upper part of the filter supports 193, to be spaced apart upward from the lower frame 191. The upper frame 192 may have an overall cylindrical shape and may form an outer circumferential wall of the upper part of the filter frame 190. The upper frame 192 may extend in a circumferential direction between the plurality of filter supports 193 being spaced apart in a circumferential direction. The upper frame 192 may be arranged to be coupled to each of adjacent filter supports 193. Accordingly, the upper frame 192 may be understood as a structure extending from the upper part of the filter frame 190 in a circumferential direction, to be coupled to the plurality of filter supports 193.

The upper frame 192 may have a detector cover 199a protruding radially outward from the front side of the filter frame 190, to enclose the air quality detector 199. The detector cover 199a may be understood as a radially outwardly protruding portion of the upper frame 192 extending in a circumferential direction. The air quality detector 199 may be disposed inside of the detector cover 199a.

The upper frame 192 may have a board cover 198a protruding radially outward from the rear side of the filter frame 190. The upper frame 192 is arranged to surround a wireless communication board 198. The board cover 198a may be understood as a radially outwardly protruding portion of the upper frame 192 extending in a circumferential direction. The wireless communication board 198 may be disposed inside of the board cover 198a.

The air quality detector 199 may measure the amount of foreign matter in the air suctioned through the air inlet 112, and may detect concentrations of dust, CO₂, gases, and/or the like. Accordingly, the air quality detector 199 may be understood as a single module having a dust sensor, a CO₂ sensor, a gas sensor, and/or the like being assembled with each other.

The wireless communication board 198 may be a PCB detecting a radio signal transmitted from an external source. The board 198 may perform the function of controlling the operation of the discharge guider 150. The wireless communication board 198 may include a wireless communication module mounted therein for communication with a remote control, disposed outside of the case 110, using a wireless communication scheme such as Wi-Fi.

The filter frame 190 may include a support plate 194 extending radially inward from a lower end of the upper frame 192, and a partition wall 195 extending upward from an inner end of the support plate 194.

The support plate 194 may have an overall annular shape extending in a circumferential direction, and may be coupled to the lower end of the upper frame 192 at a radial outer side and coupled to a lower end of the partition wall 195 at a radial inner side. The sensor assembly 20, the wireless communication board 198, and the air quality detector 199 may come into contact with the upper surface of the support plate 194 and may be supported by the support plate 194. The support plate 194 may include a plurality of low coupling bosses 197, protruding upward from the upper surface of the support plate 194 and being spaced apart from each other in a circumferential direction. The low coupling bosses 197 may serve to connect the fan housing 130 and the filter frame 190.

The partition wall 195 may have an overall cylindrical shape, and may be spaced apart from the upper frame 192 by the support plate 194 in a radially inward direction. Accordingly, the sensor assembly 20, the wireless communication board 198, and the air quality detector 199 may be spaced apart from the upper frame 192 with the partition wall 195 disposed therebetween. In the sensor assembly 20, with respect to the partition wall 195, the pressure sensor 30 may be disposed outside of the partition wall 195 and a first tube 40 and a second tube 50 may be disposed inside of the partition wall 195. The sensor assembly 20 may be disposed while passing through the partition wall 195, and the first tube 40 and the second tube 50 may pass through the partition wall 195.

A filter outlet 190a, which is a flow passage of air flowing upward after passing through the filter 120, may be formed inside of the filter frame 190. The filter outlet 190a may be a cylindrical space formed inside of the partition wall 195.

The filter outlet 190a may have a filter frame grill 196 having a mesh shape. The filter frame grill 196 may be in the shape of a spider web, and may include a plurality of first grill frames 196a extending in a radial direction, and a plurality of second grill frames 196b extending in a circumferential direction.

The plurality of first grill frames 196a may extend radially outward from the center P of the filter outlet 190a to the partition wall 195, and may be spaced apart from each other in a circumferential direction. The plurality of second grill frames 196b may be spaced apart from each other in a radial direction and may be disposed in a concentric relationship with respect to the center P of the filter outlet 190a. The filter outlet 190a may be understood as a set of mesh-shaped cells formed by the filter frame grill 196, and air having passed through the filter 102 may flow upward through the filter outlet 190a disposed at the intersection of the first grill frames 196a and the second grill frames 196b.

As illustrated in FIG. 5, when the filter frame 190 is viewed from top, the filter frame 190 may have a circular shape with respect to the center P of the filter outlet 190a.

The plurality of first grill frames 196a may extend in a radial direction so as to pass through the center P. The plurality of first grill frames 196a may include a reference frame 196a1, extending in a direction parallel to the front-rear direction, and an intersecting frame 196a2 extending in a direction intersecting the reference frame 196a1.

The orientation to indicate a relative positional relationship between the sensor assembly 20, the air quality detector 199, and the wireless communication board 198 will be described below. The direction of extension of the reference frame 196a1 may be shown by a virtual line X1-X2. As the reference frame 196a1 extends in a direction parallel to the front-rear direction, X1 may correspond to the front side and X2 may correspond to the rear side. The direction of extension of the intersecting frame 196a2 may be shown with a virtual line Y1-Y2, and the sensor assembly 20 may be disposed close to the Y1 direction. The virtual line X1-X2 is substantially orthogonal to the virtual line Y1-Y2.

The wireless communication board 198 may be disposed at a position intersecting the line X1-X2, and may be disposed at the rear side (X2) on the line X1-X2. The air quality detector 199 may be disposed at a position intersecting with the line X1-X2, and may be disposed at the front side (X1) on the line X1-X2. Accordingly, the wireless communication board 198 and the air quality detector 199 may be disposed in alignment with each other on a virtual line, and may be disposed symmetrical with respect to the center P in the front-rear direction, i.e. with respect to the virtual line Y1-Y2.

The sensor assembly 20 may be disposed at a position close to the rear side (X2) with respect to the line Y1-Y2. Further, the sensor assembly 20 may be disposed at a position which is on the line Z having a predetermined included angle θ with respect to the line Y1-Y2. The line Z may refer to a virtual line segment formed at a position spaced apart by a central angle θ from the line Y1-Y2 toward the rear side (X2). The line Z may be a line intersecting with the line Y1-Y2 at the center P. The line Z, representing an arrangement position of the sensor assembly 20, may be referred to as an "orientation line," and the line Y1-Y2, setting a reference position at which the sensor assembly 20 is disposed, may be referred to as a "reference line."

The orientation line Z may pass between the first tube 40 and the second tube 50, and may pass through the center of the pressure sensor 30. In other words, the sensor assembly 20 may be disposed at a position closer to the wireless communication board 198 than the air quality detector 199, and may be disposed at the rear side X2 with respect to the reference line Y1-Y2 intersecting with the front-rear direction. Based on the arrangement position of the sensor assembly 20, the sensor assembly 20 may be spaced apart from the air quality detector 199 in a circumferential direction or may maintain a sufficient separation distance from the air quality detector 199.

The air quality detector 199 may include a dust sensor and a CO₂ sensor, both of which have a heater to heat the air drawn thereinto. The dust sensor and the CO₂ sensor may measure the amount of foreign matter contained in the air by emitting light of a specific wavelength to an ascending air current formed by the air heated by the heater. In contrast, the pressure sensor 30 measures air pressure inside the first tube 40 and the second tube 50, respectively. Based on the foregoing, during measurement of air pressure, an increase in ambient temperature may lead to a change in pressure, such that when the air quality detector 199 is disposed near the pressure sensor 30, reliability of values measured by the pressure sensor 30 is reduced due to the heater inside the air quality detector 199. In this respect, the sensor assembly 20 according to the present disclosure is disposed at a sufficient separation distance from the air quality detector 199, such that reliability of the values measured by the pressure sensor 30 may be improved.

The pressure sensor 30 may be disposed between the upper frame 192 and the partition wall 195, and may be mounted on the support plate 194. The filter outlet 190a may form a discharge flow passage on the inside of the partition wall 195, for air having passed through the filter 120 and flowing toward the air outlet 152. As the pressure sensor 30 is disposed outside of the partition wall 195, the pressure sensor 30 may not be exposed to the discharge flow passage. In other words, the pressure sensor 30 may be disposed in a space separated from the discharge flow passage.

The first tube 40 and the second tube 50 may be disposed between the partition wall 195 and the center P, and may be coupled to the pressure sensor 30. The first tube 40 and the second tube 50 may extend in a direction substantially orthogonal to an extension direction of the partition wall 195, and may extend toward the center P. The extension direction of the first tube 40 and the second tube 50 may be in parallel to the orientation line Z, and may be in parallel to an extension direction of any one of the plurality of first grill frames 196a. The first tube 40 and the second tube 50 may be disposed above the filter frame grill 196, and thus may be exposed to the discharge flow passage through which air, having passed through the filter 120, flows to the air outlet 152.

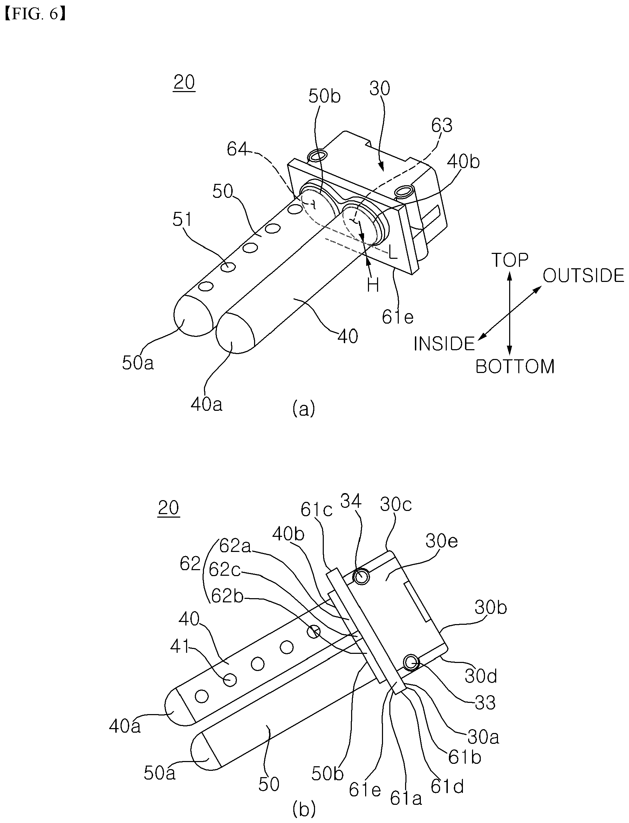

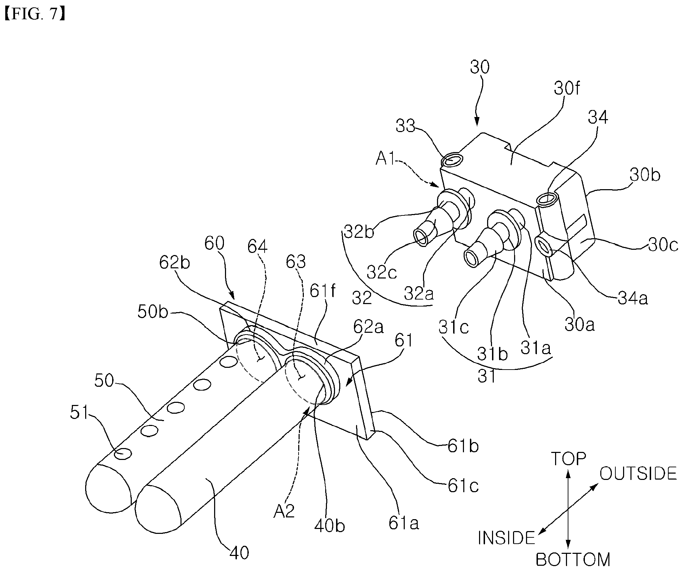

A detailed structure of the components 30, 40, 50, and 60 of the sensor assembly 20, and a connection relationship therebetween will be described below with reference to FIGS. 6 and 7.

FIG. 6 (a) illustrates the sensor assembly 20 as seen from above at an angle; FIG. 6 (b) illustrates the sensor assembly 20 as seen from below; and FIG. 7 illustrates the sensor assembly 20 divided into the pressure sensor 30 and the other components 40, 50, and 60.

The sensor assembly 20 includes the first tube 40 having a first hole 41 disposed at the downstream side of the filter 120, and being open toward the filter 120; a second tube 50 having a second hole 51 disposed at the downstream side of the filter 120 and being open in a direction opposite to the filter 120; and the pressure sensor 30 coupled to the first tube 40 and the second tube 50, to measure air pressure inside the first tube 40 and the second tube 50, respectively. In addition, the sensor assembly 20 may include an adaptor 60 connecting the pressure sensor 30, the first tube 40, and the second tube 50. The first tube 40 and the second tube 50 may be made of a rubber material.

Prior to the description of the structure thereof, directions will be described first for convenience of explanation. As illustrated in FIGS. 4 and 5, in the arrangement of the sensor assembly 30, the pressure sensor 30 is disposed radially outward. The first and second tubes 40 and 50 are relatively disposed radially inward compared to the pressure sensor 30. A direction from the pressure sensor 30 to the first and second tubes 40 and 50 is defined as an inner side, and a direction from the first and second tubes 40 and 50 to the pressure sensor 30 is defined as an outer side. Further, a direction in which the first hole 41 is open is defined as a lower side, and a direction in which the second hole 51 is open is defined as an upper side.

The pressure sensor 30 may have an overall hexahedral shape, and may include: an inner sensor surface 30a being in contact with the adaptor 60; and an outer sensor surface 30b spaced apart from and disposed outside of the inner sensor surface 30a. The pressure sensor 30 comprises one sensor side surface 30c extending in a radial direction and connecting the inner sensor surface 30a and the outer sensor surface 30b; and the other sensor side surface 30d spaced apart from the one sensor side surface 30c in a circumferential direction. There is further provided with a lower sensor surface 30e connecting the one sensor side surface 30c and the other sensor side surface 30d; and an upper sensor surface 30f upwardly spaced apart from the lower sensor surface 30e.

The first tube 40 may have a hollow cylindrical shape, and may include: a first hole 41 which is open downwardly; a first inner end portion 40a spaced apart from the adaptor 60 on the inside thereof; and a first outer end portion 40b coupled to the adaptor 60.

The second tube 50 may have a hollow cylindrical shape, and may include: a second hole 51 which is open upwardly; a second inner end portion 50a spaced apart from the adaptor 60 on the inside thereof; and a second outer end portion 50b coupled to the adaptor 60.

The adaptor 60 may include a base plate 61 having a flat plate shape and a receptor 62 protruding inwardly from the base plate 61. There is further provided with a first terminal hole 63 into which a first terminal 31 of the pressure sensor 30 is inserted; and a second terminal hole 64 into a second terminal 32 of the pressure sensor 30 is inserted.

The base plate 61 may have a hexahedral shape with terminal holes 63 and 64 formed therein. The base plate 61 may include: an inner adaptor surface 61a from which the receptor 62 protrudes; and an outer adaptor surface 61b spaced apart from and disposed outside of the inner adaptor surface 61a. There is further provided with one adaptor side surface 61c extending in a radial direction and connecting the inner adaptor surface 61a and the outer adaptor surface 61b; and the other adaptor side surface 61d spaced apart from the one adaptor side surface 61c in a circumferential direction. The base plate 61 further comprises a lower adaptor surface 61e connecting the one adaptor side surface 61c and the other adaptor side surface 61d; and an upper adaptor surface 61f spaced apart upward from the lower adaptor surface 61e.

The receptor 62 has a glasses-like shape, and may include: a first rim portion 62a connected to the first tube 40; a second rim portion 62b connected to the second tube 50; and a rim connecting portion 62c connecting the first rim portion 62a and the second rim portion 62b.

A plurality of first holes 41 may be formed in a longitudinal direction of the first tube 40 and may be spaced apart from each other in a radial direction. Air, having passed through the filter 120, may pass through the first holes 41 to flow into the first tube 40, such that dynamic pressure is generated in the first tube 40. The first inner end portion 40a may be rounded to shield the inside of the first tube 40, and the first outer end portion 40b may be open to communicate with the first terminal hole 63. An outer diameter of the first outer end portion 40b may be smaller than an inner diameter of the first terminal hole 63, such that the first outer end portion 40b may be inserted into the first terminal hole 63 to be connected to the adaptor 60.

A plurality of second holes 51 may be formed in a longitudinal direction of the second tube 50 and may be spaced apart from each other in a radial direction. Air, having passed through the filter 120, may not pass through the second holes 41, such that static pressure is generated in the second tube 50. The second inner end portion 50a may be rounded to shield the inside of the second tube 50, and the second outer end portion 50b may be open to communicate with the second terminal hole 64. An outer diameter of the second outer end portion 50b may be smaller than an inner diameter of the second terminal hole 64, such that the second outer end portion 50b may be inserted into the second terminal hole 64 to be connected to the adaptor 60.

The first rim portion 62a may protrude inward from the inner adaptor surface 61a so that an inner diameter of the first rim portion 62a may be equal to the diameter of the first terminal hole 63; and the second rim portion 62b may protrude inward from the inner adaptor surface 61a so that an inner diameter of the second rim portion 62b may be equal to the diameter of the second rim portion 62b. The rim connecting portion 62c, disposed between the first rim portion 62a and the second rim portion 62b, may connect the first rim portion 62a and the second rim portion 62b, to form an integrated receptor 62. An inner space of the first rim portion 62a may communicate with the first terminal hole 63, and an inner space of the second rim portion 62b may communicate with the second terminal hole 64. The first tube 40 may be inserted into the inner space of the first rim portion 62a to be fixed to the receptor 62 and the base plate 61; and the second tube 50 may be inserted into the inner space of the second rim portion 62b to be fixed to the receptor 62 and the base plate 61. The first tube 40, the second tube 50, and the adaptor 60 may be manufactured separately and assembled together; or the first and second tubes 40 and 50 and the adaptor 60 may be integrally formed with each other.

The first tube 40 and the second tube 50 may be coupled to the adaptor 60 at a position upwardly spaced apart from the lower adaptor surface 60e. An outer diameter of the first tube 40 may be equal to that of the second tube 50, and may be coupled to the adaptor 60 at the same height. In this case, a tangential line L at a lowest position of the first and second tubes 40 and 50 may have a predetermined height difference H from the lower adaptor surface 61e. Accordingly, the lowest side of the first and second tubes 40 and 50 may be spaced apart upward from the lower adaptor surface 61e by the height difference H. The lower adaptor surface 61e may be disposed on the same plane as the filter frame grill 196. When the sensor assembly 20 is disposed at the filter frame 190, the first and second tubes 40 and 50 may be spaced apart upward from the filter frame grill 196 by the height difference H.

The first terminal 31 and the second terminal 32 may have the same shape and may protrude inward from the inner sensor surface 30a. The first terminal 31 and the second terminal 32 may protrude at the same height, and may be spaced apart upward from the lower sensor surface 30e by the height difference H.

The first terminal 31 may include a first terminal connecting part 31a connected to the sensor inner surface 30a; a first terminal rim 31b having an annular shape and connected on the inside to the first terminal connecting part 31a; and a first port 31c disposed on the inside of the first terminal rim 31b. An outer diameter of the first terminal rim 31b may be greater than an outer diameter of the first terminal connecting part 31a and the first port 31c, and the first terminal connecting part 31a and the first port 31c may be connected to each other by the first terminal rim 31b.

The second terminal 32 may include a second terminal connecting part 32a connected to the sensor inner surface 30a; a second terminal rim 32b having an annular shape and connected on the inside to the second terminal connecting part 32a; and a second port 32c disposed on the inside of the second terminal rim 32b. An outer diameter of the second terminal rim 32b may be greater than an outer diameter of the second terminal connecting part 32a and the second port 32c, and the second terminal connecting part 32a and the second port 32c may be connected to each other by the second terminal rim 32b.

At least a portion of the first terminal 31 may be inserted into the first tube 40 through the first terminal hole 63; and at least a portion of the second terminal 32 may be inserted into the second tube 50 through the second terminal hole 64. The first terminal 31 may measure dynamic pressure of air in the first tube 40; and the second terminal 32 may measure static pressure of air in the second tube 50. By calculating a difference between the dynamic pressure, measured by the first terminal 31, and the static pressure measured by the second terminal 32, the pressure sensor 30 may calculate information on a filter replacement period. Accordingly, the pressure sensor 30 may be referred to as a "differential pressure sensor" for determining a filter replacement period, i.e. timing to replace a filter, based on a pressure difference between the dynamic pressure and the static pressure.

The pressure sensor 30 may include: a hollow first boss groove 33 connected to the inner sensor surface 30a and the other sensor side surface 30d; and a hollow second boss groove 34 connected to the inner sensor surface 30a and the one sensor side surface 30c. The first boss groove 33 and the second boss groove 34 may have the same shape and may have a cylindrical shape extending in the up and down direction. The first boss groove 33 may be formed at an edge portion where the inner sensor surface 30a and the other sensor side surface 30d come into contact with each other; and the second boss groove 34 may be formed at an edge portion where the inner sensor surface 30a and the one sensor side surface 30c come into contact with each other. A compression boss 34a, protruding inwardly, may be formed at the second boss groove 34. The compression boss 34a may protrude from the center of the second boss groove 34 toward the base plate 61, and may come into contact with the outer adaptor surface 61b when the pressure sensor 30 is connected to the adaptor 60. The first boss groove 33 may be connected on the upper side to the upper sensor surface 30f, to form a continuous surface, and may be connected on the lower side to the lower sensor surface 30e, to form a continuous surface. The compression boss 34a may be connected to the inner sensor surface 30a to form a continuous surface.

A cross-sectional area A2 of the adaptor 60 may greater than a cross-sectional area A1 of the pressure sensor 30. This indicates that a size of an adaptor area A2 of the base plate 61 is greater than a sensor cross-sectional area A1 of the pressure sensor 30. The adaptor area A2 may refer to an area of the inside of an outer circumferential surface of the base plate 61, and the sensor cross-sectional area A1 may refer to an area of the inside of an outer circumferential surface of the inner sensor surface 30a. In other words, a front surface of the pressure sensor 30 facing and coupled to the adapter 60 has a smaller area than a rear surface of the adapter 60 coupled to the front surface of the pressure sensor 30. When the pressure sensor 30 is connected to the adaptor 60, the inner sensor surface 30a may be pressed against the outer adaptor surface 61b; and when the sensor assembly 20 is viewed from the side of the filter outlet 190a, the inner sensor surface 30a may be covered by the base plate 61 and thus is not visible.

The pressure sensor 30 may be connected to the tubes 40 and 50 through the adaptor 60. When the terminals 31 and 32 are inserted into the terminal holes 63 and 64, the outer adaptor surface 61b and the inner sensor surface 30a may be connected to each other with an adhesive agent or a predetermined coupling member. The respective components 30, 40, 50, and 60 of the sensor assembly 20 may be manufactured separately and assembled together to form the sensor assembly 20, and some or all of the components 30, 40, 50, and 60 may be integrally formed with each other to form the sensor assembly 20.

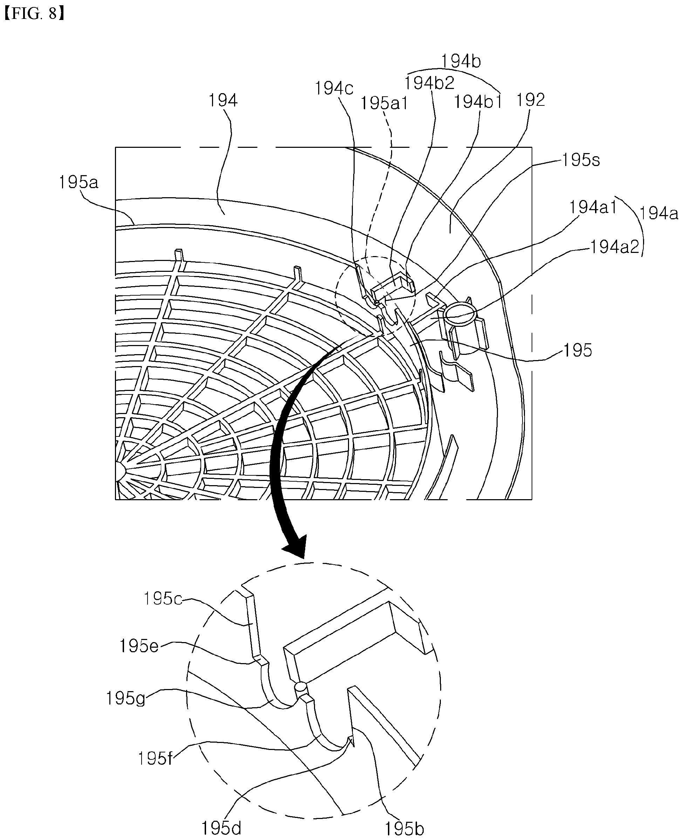

Hereinafter, a structure of the sensor assembly 20 supported by the filter frame 190 will be described with reference to FIG. 8.

FIG. 8 is a diagram illustrating the filter frame 190, as seen from above, before the sensor assembly 20 is mounted.

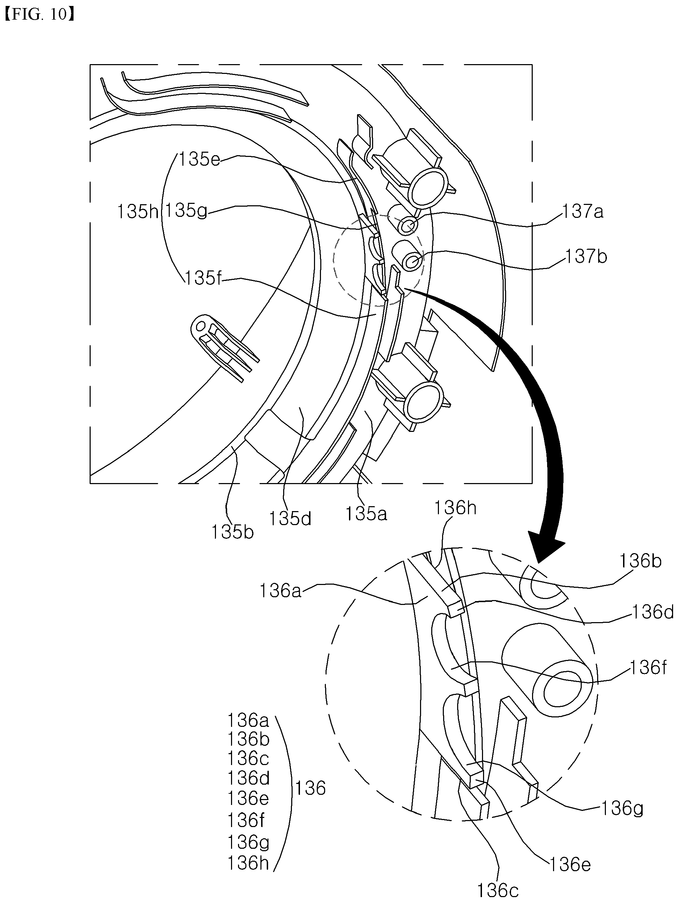

The partition wall 195 may protrude upward from an inner end portion of the support plate 194, and may extend in a circumferential direction to have a cylindrical shape. The partition wall 195 is partially cut to form cut-out grooves 195s, through which the tubes 40 and 50 pass. The upper part of the cut-out groove 195s is open, such that a holding wall 136 (see FIG. 10) which will be described later may be inserted in the cut-out groove 195s.

The cut-out groove 195s may refer to an inner space surrounded by: a virtual extension surface 195a1 extending in a circumferential direction from the cut-out portions along an extension direction of the partition wall upper end 195a; a first cut-out surface 195b and a second cut-out surface 195b extending downwardly from the partition wall upper end 195a; a first low flat surface 195d extending flatly in a circumferential direction from the first cut-out surface 195b; a second low flat surface 195e extending flatly in a circumferential direction from the second cut-out surface 195c; a first support surface 195f extending curvedly in a circumferential direction from the first low flat surface 195d; a second support surface 195g extending curvedly in a circumferential direction from the second low flat surface 195e.

The first support surface 195f and the second support surface 195g may be rounded downwardly, and may have a semicircular shape. An inner diameter of the first support surface 195f may be equal to the outer diameter of the first tube 40; and an inner diameter of the second support surface 195g may be equal to the outer diameter of the second tube 50. The first tube 40 may be mounted on the first support surface 195f by passing through the cut-out groove 195s, and the second tube 50 may be mounted on the second support surface 195g by passing through the cut-out groove 195s.

A first fence 194a, a second fence 194b, and the low boss 194c for supporting the pressure sensor 30, which are disposed between the partition wall 195 and the upper frame 192, may protrude upward from the support plate 194. The first fence 194a, the second fence 194b, and the low boss 194c may be disposed outside of the cut-out groove 195s.

The low boss 194c may be disposed at a position closer to the cut-out groove 195s than the first fence 194a and the second fence 194b, and may be disposed between the first fence 194a and the second fence 194b at a position closer to the second fence 194b than to the first fence 194a. The low boss 194c may be inserted into the first boss groove 33 of the pressure sensor 30 to support the pressure sensor 30, and movement of the pressure sensor 30 in a radial direction or a circumferential direction may be restricted by the low boss 194c.

The first fence 194a may include: a first fence outer wall 194a1 extending in a circumferential direction; and a first fence inner wall 194a2 extending radially inward from the first fence outer wall 194a1. The first fence outer wall 194a1 may come into contact with the sensor outer surface 30b when the sensor assembly 20 is mounted; and the first fence inner wall 194a2 may come into contact with the one sensor side surface 30c when the sensor assembly 20 is mounted.

The second fence 194 may include: a second fence outer wall 194b1 extending in a circumferential direction; and a second fence inner wall 194b2 extending radially inward from the second fence outer wall 194b1. The second fence outer wall 194b 1 may come into contact with the outer sensor surface 30b when the sensor assembly 20 is mounted; and the second fence inner wall 194b2 may come into contact with the other sensor surface 30d when the sensor assembly 20 is mounted.

The first fence 194a and the second fence 194b have the same shape, and may be symmetrical to each other with respect to the orientation line Z (see FIG. 5). The movement of the pressure sensor 30 in a radial direction or a circumferential direction may be restricted by the first fence 194a and the second fence 194b.

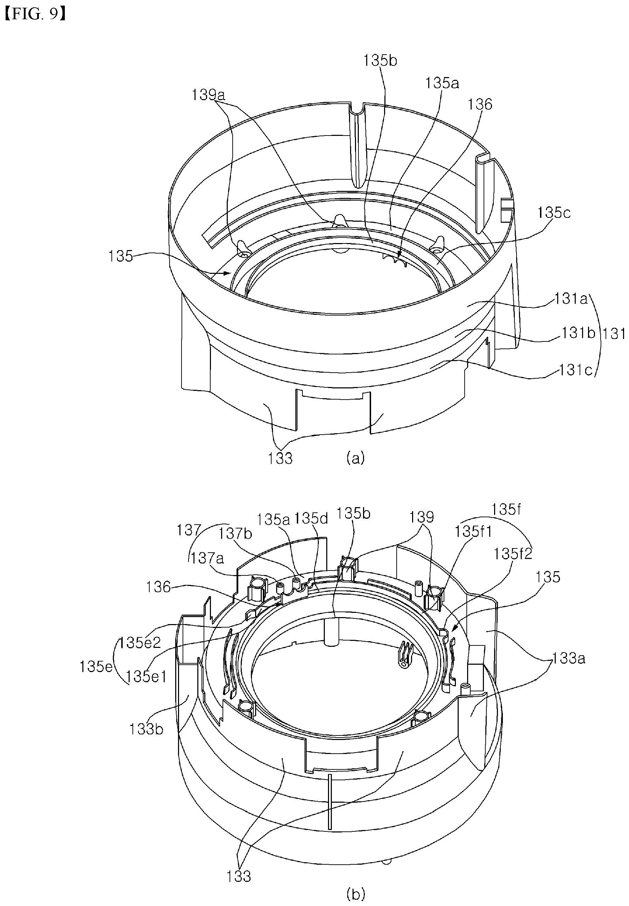

Hereinafter, a detailed structure of the fan housing 130, and a structure in which the holding wall 136 of the fan housing 130 is inserted into the cut-out groove 195s of the filter frame 190 will be described below with reference to FIGS. 9 and 10. FIG. 9 (a) illustrates a shape of the fan housing 130 as seen from above, and FIG. 9 (b) illustrates a shape of the fan housing 130 as seen from below.

The fan housing 130 may include: a housing outer wall 131 providing a receiving space for receiving the blower fan 132; a housing plate 135 extending radially inward from an inner circumferential surface of the housing outer wall 131; and an upper frame cover 133 extending downwardly from a lower part of the housing outer wall 131.

The housing outer wall 131 may include an upper outer wall 131a forming an upper part of the housing outer wall 131; a middle outer wall 131b extending downwardly from a lower end of the upper outer wall 131a; and a low outer wall 131c extending downwardly from a lower end of the middle outer wall 131b. An outer diameter of the upper outer wall 131a may be greater than an outer diameter of the low outer wall 131c; and the middle outer wall 131b may be curved to connect the upper outer wall 131a and the low outer wall 131c.

The upper frame cover 133 may extend downwardly from the lower end of the housing outer wall 131, and a plurality of upper frame covers 133 may be spaced apart from each other in a circumferential direction. When the fan housing 130 and the filter frame 190 are coupled to each other, the upper frame cover 133 may be disposed to surround an outer circumferential surface of the upper frame 192. The upper frame cover 133 may include: a front cover 133a surrounding a portion of the outer circumferential surface of the detector cover 199a; and a rear cover 133b surrounding an outer circumferential surface of the board cover 198a, when the fan housing 130 and the filter frame 190 are coupled to each other.

The housing plate 135 may include: a plate body 135a extending in a radial direction; a rounded portion 135d curved upwardly from the inner end of the plate body 135a; an inner rim 135b extending upwardly from the rounded portion 135d; and an outer rim 135c extending upwardly from the upper surface of the plate body 135a. The outer rim 135c may be disposed outside of the inner rim 135b, and may be disposed in a concentric relationship with the inner rim 135b.

The holding wall 136, inserted into the cut-out groove 195s of the filter frame 190, may extend downwardly from the lower surface of the plate body 135a. The holding wall 136 may protrude downwardly from a connection portion between the plate body 135a and the rounded portion 135d, and may be disposed outside of the inner rim 135b.

An upper boss 137, protruding downwardly from the lower surface of the plate body 135a, may be formed on the outside of the holding wall 136. A plurality of upper bosses 137 may be spaced apart from each other in a circumferential direction, and may include a first upper boss 137a and a second upper boss 137b. A pair of upper bosses 137a and 137b may be formed in the same shape. The first upper boss 137a may be disposed at a position corresponding to the outer side of the first tube 40; and the second upper boss 137b may be disposed at a position corresponding to the outer side of the second tube 50. When the fan housing 130 is coupled to the filter frame 190, the upper boss 137 may protrude toward the pressure sensor 30 to come into contact with the upper sensor surface 130f.

A first reinforcement rib 135e and a second reinforcement rib 135f, protruding downwardly from the lower surface of the plate body 135a, may be formed between the holding wall 136 and the upper boss 137. The first reinforcement rib 135e and the second reinforcement rib 135f may extend in opposite directions, and may be coupled to each other by a reinforcement rib coupling portion 135g (see FIG. 10) on the outside of the holding wall 136, to form an integrated reinforcement rib 135h (see FIG. 10) extending in a circumferential direction. The first reinforcement rib 135e may include a first extending reinforcement rib portion 135e1, extending in a circumferential direction, and a first rigid reinforcement rib portion 135e2 curvedly extending outward from the first extending reinforcement rib portion 135e1. The second reinforcement rib 135f may include a second extending reinforcement rib portion 135f1, extending in a circumferential direction, and a second rigid reinforcement rib portion 135f2 curvedly extending outward from the second extending reinforcement rib portion 135f1.

The fan housing 130 may include an upper coupling boss 139 coupled to the low coupling boss 197 of the filter frame 190. The upper coupling boss 139 may protrude downwardly from the lower surface of the plate body 135a and may have a hollow cylindrical shape. An inner diameter of the upper coupling boss 139 may be greater than an outer diameter of the low coupling boss 197, and the low coupling boss 197 may be received in the upper coupling boss 139.

A coupling boss connecting groove 139a, which is open from top to bottom, starting from the upper surface of the plate body 135a, may be formed in the fan housing 130. The coupling boss connecting groove 139a is open from the upper surface to the lower surface of the plate body 135a, to form a through hole in the plate body 135a, and may communicate with the inner space of the upper coupling boss 139. When the fan housing 130 and the filter frame 190 are coupled to each other, the upper coupling boss 139 and the low coupling boss 197 may be coupled to each other by a predetermined coupling member (not shown) passing through the coupling boss connecting groove 139a.

Referring to FIG. 10, the lower surface of the plate body 135a may extend flatly in a radial direction; and the rounded portion 135d may be curved upwardly from the inner end of the lower surface of the plate body 135a. The holding wall 136 may protrude downwardly from the inner end of the lower surface of the plate body 135a.

The holding wall 136 may have a shape corresponding to the cut-out groove 195s of the filter frame 190. The holding wall 136 may include: a holding wall inner surface extending downwardly from the plate body 135a; a holding wall side surface 136b extending radially outward from the holding wall inner surface 136a; the other holding wall side surface 136c disposed opposite to and spaced apart from the holding wall side surface 136a in a circumferential direction; a first upper flat surface 136d extending from the holding wall side surface 136b in a circumferential direction; a second upper flat surface 136e extending from the other holding wall side surface 136c in a circumferential direction; a first holding surface 136f curvedly extending from the first upper flat surface 136d in a circumferential direction; a second holding surface 136g curvedly extending from the second upper flat surface 136e in a circumferential direction; and a holding wall outer surface 136h disposed opposite to and spaced apart from the holding wall inner surface 136a in a radially outward direction.

The first holding surface 136f and the second holding surface 136g may be rounded upwardly, and may have a semicircular shape. An inner diameter of the first holding surface 136f may be equal to the outer diameter of the first tube 40; and an inner diameter of the second holding surface 136g may be equal to the outer diameter of the second tube 50. The first tube 40 may come into contact with the first holding surface 136f, and the second tube 50 may come into contact with the second holding surface 136g.

When the fan housing 130 and the filter frame 190 are coupled to each other, the first cut-out surface 195b may come into contact with the holding wall side surface 136b; the second cut-out surface 195c may come into contact with the other holding wall side surface 136c; the first low flat surface 195d may come into contact with the first upper flat surface 136d; and the second low flat surface 195e may come into contact with the second upper flat surface 136e.

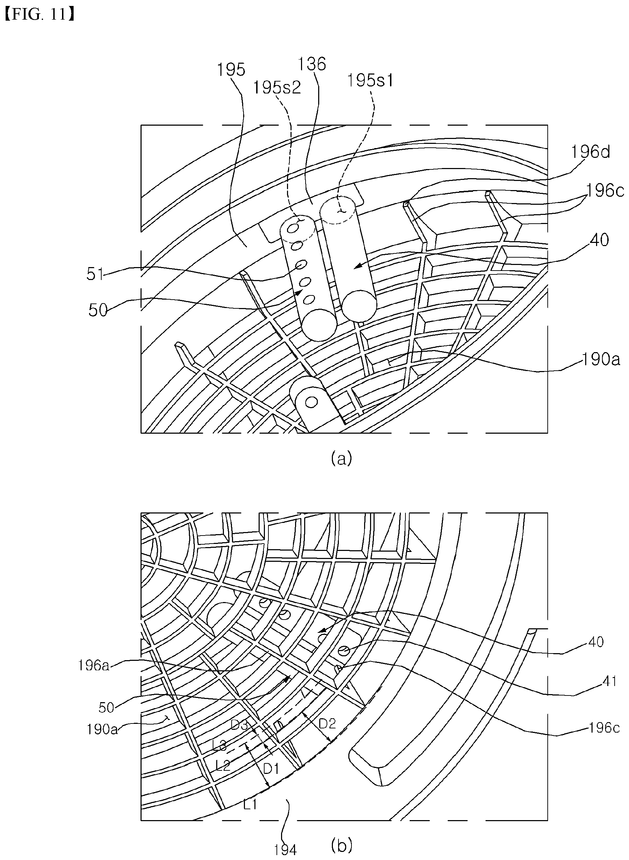

When the fan housing 130 and the filter frame 190 are coupled to each other, the first support surface 195f and the first holding surface 136f may face each other in a vertical direction, and the second support surface 195g and the second holding surface 136g may face each other in a vertical direction. The first support surface 195f and the first holding surface 136f are connected to each other to form a first through hole 195s1 (see FIG. 11), through which the first tube 40 is inserted. The second support surface 195g and the second holding surface 136g are connected to each other to form a second through hole 195s2 (see FIG. 11), through which the second tube 50 is inserted. The first through hole 195s1 and the second through hole 195s2 may refer to a partial area of the cut-out groove 195s.

The first upper boss 137a may be disposed at a position, corresponding to the first through hole 195s1, on the outside of the holding wall 136. The second upper boss 137b may be disposed at a position, corresponding to the second through hole 195s2, on the outside of the holding wall 136.

The first reinforcement rib 135e and the second reinforcement rib 135f may be coupled to each other by the reinforcement rib connecting portion 135g on the outside of the holding wall 136. The reinforcement rib connecting portion 135g may protrude downwardly from the lower surface of the plate body 135a, and may be disposed above the holding surfaces 136f and 135g.

The first reinforcement rib 135e, the second reinforcement rib 135g, and the reinforcement rib connecting portion 135g may be integrally formed with each other to form the integrated reinforcement rib 135h extending in a circumferential direction, and the reinforcement rib 135h may support the pressure sensor 30 when the fan housing 130 and the filter frame 190 are coupled to each other.

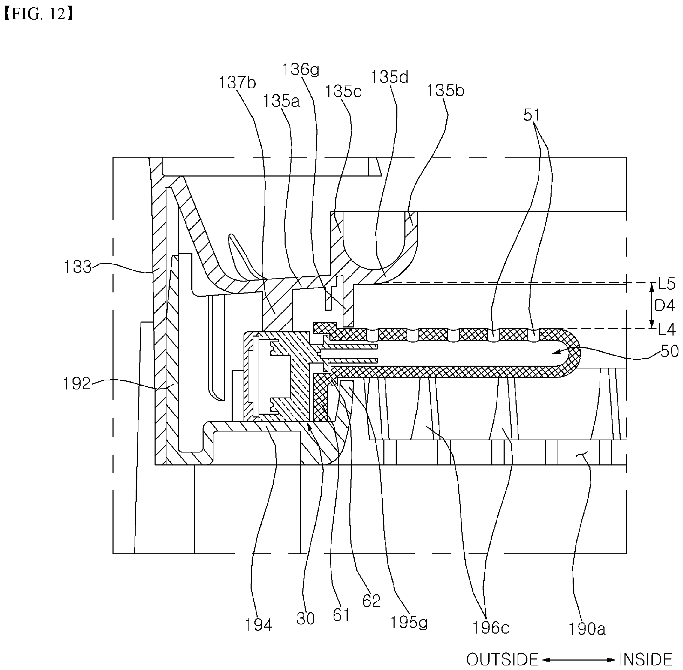

Hereinafter, a structure of the sensor assembly 20, fixed by coupling of the fan housing 130 and the filter frame 190, and a separation relationship between the filter outlet 190a and the sensor assembly 20 will be described with reference to FIGS. 11 and 12.

FIG. 11 (a) is a diagram illustrating a fixed sensor assembly 20, as seen from above; FIG. 11 (b) illustrate a diagram illustrating a fixed sensor assembly 20, as seen from below; and FIG. 12 is a longitudinal sectional view of a fixed sensor assembly 20.

When the fan housing 130 and the filter frame 190 are coupled to each other, the lower surface of the plate body 135a may come into contact with the upper end of the partition wall 195. The holding wall 136 is inserted into the cut-out groove 195s of the partition wall 195, to form the first through hole 195s1 into which the first tube 40 is inserted, and the second through hold 195s2 into which the second tube 50 is inserted.

The first tube 40 may be inserted into the first through hole 195s1, such that the first hole 41 may be disposed to face the filter outlet 190a. The second tube 50 may be inserted into the second through hole 195s2, such that the second hole 51 may be disposed to face the fan housing inlet 130a. The fan housing inlet 130a may refer to a circular space formed on the inside the plate body 135a, and may be understood as a "discharge flow passage" communicating vertically with the filter outlet 190a to guide air, having passed through the filter 120, to pass through the blower fan 132 toward the air outlet 152.

After passing through the filter outlet 190a, air flows into the first hole 41 to generate dynamic pressure in the first tube 40, and air in the second tube 50 flows to the blower fan 132 through the second hole 51 by the operation of the blower fan 132, to generate static pressure by buoyancy.

The filter frame grill 196 may have a grill edge 196c extending upwardly from an outer end of the first grill frame 196a. The grill edge 196c may be integrally formed with the first grill frame 196a extending in a radially direction, and may be connected to the inner circumferential surface of the partition wall 195. The grill edge 196c may extend up to a middle point of the height of the partition wall 195, and an upper grill edge surface 196d may be located at the middle point of the height of the partition wall 195.

A plurality of grill edges 196c may be provided, which extend upwardly from the respective first grill frames 196a. At least one of the plurality of grill edges 196c may be disposed between the first tube 40 and the second tube 50.

A line extending from an inner end of the support plate 194 is defined as a first line L1; a line extending from a lowest end of the tubes 40 and 50 in a direction parallel to the first line L1 is defined as a second line L2; and a line extending from the upper grill edge surface 195d in a direction parallel to the first line L1 is defined as a third line L3.

The first line L1 and the third line L3 may be vertically spaced apart from each other by a first height D1, such that the grill edge 195c may extend upwardly from the support plate 194 by the first height D1.

The first line L1 and the second line L2 may be vertically spaced apart from each other by a second height D2, such that the tubes 40 and 50 may be upwardly spaced apart from each other by the second height D2. The first grill frame 196a may extend at the same height as the support plate 194, such that the tubes 40 and 50 may be upwardly spaced apart from the filter outlet 190a by the second height D2. In addition, as the first hole 41 is upwardly spaced apart from the filter outlet 190a by the second height D2, the air having passed through the filter outlet 190a may flow upward by the second height D2, and then may flow into the first tube 40 through the first hole 41.

The second line L2 and the third line L3 may be upwardly spaced apart from each other by a third height D3, such that the grill edge 195c may protrude upwardly from the lowest end of the tubes 40 and 50 by the third height D3. At least one of the plurality of grill edges 195c may extend between the first tube 40 and the second tube 50, and as the upper grill edge surface 915d is disposed between the first tube 40 and the second tube 50, rigidity of the sensor assembly 20 may be secured.

Referring to FIG. 12, the second tube 50 is disposed between the second support surface 195g and the second holding surface 136g, to be supported by the second support surface 195g and the second holding surface 136g. The receptor 62 may be disposed outside of the second through hole 195s2, and may come into contact with outer surfaces of the second support surface 195g and the second holding surface 136g. The relationship between the receptor 62 and the second through hole 195s2 may also apply equally to a relationship between the receptor 62 and the first through hole 195s1. The base plate 61 may be spaced apart outwardly from the first through hole 195s1 and the second through hole 195s2 by a predetermined distance, and may be seated on the support plate 194. The lower sensor surface 30e may come into contact with the upper surface of the support plate 194, and the pressure sensor 30 may be supported by the support plate 194.

An outer circumferential surface of the upper frame 192 may come into contact with an inner circumferential surface of the upper frame cover 133, and may be supported thereby. A lower surface of the second upper boss 137b may come into contact with the sensor upper surface 30f, and the pressure sensor 30 may be fixed by the second upper boss 137b. The relationship between the second upper boss 137b and the upper sensor surface 30f may also apply equally to a relationship between the first upper boss 137a and the upper sensor surface 30f.

A line of the plate body 135a extending radially inward is defined as a fourth line L4, and a line extending from a highest end of the tubes 40 and 50 in a direction parallel to the fourth line L4 is defined as a fifth line L5.

The fourth line L4 and the fifth line L5 may be vertically spaced apart from each other by a fourth height D4, such that the tubes 40 and 50 may be downwardly spaced apart from each other by the fourth height D4. The fan housing inlet 130a, into which air having passed through the filter outlet 190a flows, may be formed on the inside of the plate body 135a, such that the tubes 40 and 50 may be spaced apart downwardly from the fan housing inlet 130a by the fourth height D4. Further, as the second hole 51 is spaced apart downwardly from the fan housing inlet 130a by the fourth height D4, the air having passed through the second hole 51 may flow upward by the fourth height D4, and then may be blown by the blower fan 132 through the fan housing inlet 130a.

At least one of the plurality of second holes 51 may be disposed to face the rounded portion 135d of the fan housing 130 disposed at the upper side. In addition, at least any one of the plurality of second holes 51 may be disposed further inward than the outer rim 135c of the fan housing 130, and disposed further outward than the inner rim 135b of the fan housing 130.

For convenience of explanation, the above description of the structure of each of the filter frame 190, the fan housing 130, and the sensor assembly 20 and a correlation therebetween is given using the first filter frame 190 and the first fan housing 130 in the lower blower unit 100 as an example. The same may also apply to a relationship between the second filter frame 290 and the second fan housing 230, and the description of the lower blower unit 100 may also apply equally to the structure of the second filter frame 290 and the second fan housing 230 and a correlation therebetween.

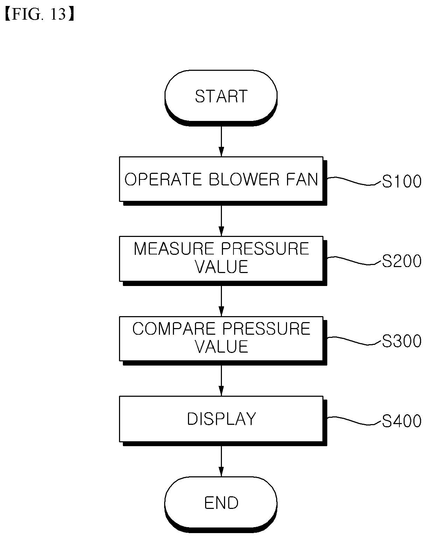

Hereinafter, a method of displaying a filter replacement period based on values measured by the sensor assembly 20 according to the present disclosure will be described with reference to FIG. 13. FIG. 13 is a block diagram explaining a process of displaying a filter replacement period.

The method of displaying a filter replacement period by the air cleaner 10 according to the present disclosure includes: a blower fan operating step (S100) to supply clean air to an indoor space by operation of the blower fans 132 and 232; a pressure value measuring step (S200) to measure pressure of air in the first tube 40 and the second tube 50 by the pressure sensor 30; a pressure value comparing step (S300) to determine a filter replacement period by comparing dynamic pressure in the first tube 40 and static pressure in the second tube 50; and a displaying step (S400) to display the determined filter replacement period to the outside through the display 390. The blower fan operating step (S100), the pressure value measuring step (S200), the pressure value comparing step (S300), and the displaying step (S400) may be performed in the described order.

The blower fan operating step (S100) may be started according to an operation command of the air cleaner 10 transmitted by a user through a remote control. The wireless communication board 198 may receive a signal transmitted by the user, to operate the blower fans 132, 232, and 330. By the operation of the blower fans 132 and 232, air having passed through the filters 120 and 220 may flow toward the sensor assembly 20.

In the pressure value measuring step (S200), the dynamic pressure in the first tube 40 and the static pressure in the second tube 50 may be measured by the pressure sensor 30. The pressure sensor 30 may measure the pressure of air in the first tube 40 through the first terminal 31 inserted into the first tube 40, and may measure the pressure of air in the second tube 50 through the second terminal 32 inserted into the second tube 50. However, the pressure sensor 30 may measure only the dynamic pressure in the first tube 40 without measuring the static pressure in the second tube 50.

In the pressure value comparing step (S300), a pressure difference between the dynamic pressure and the static pressure, which are measured in the pressure value measuring step S200, may be calculated. A sum of the dynamic pressure and the static pressure may be equal to the atmospheric pressure, and the dynamic pressure may be greater than the static pressure. Based on a differential pressure value, indicative of a pressure difference between the dynamic pressure and the static pressure, the pressure sensor 30 may determine whether it is necessary to replace the filters 120 and 220. Specifically, as the differential pressure value increases, the pressure sensor 30 may determine that air is blown efficiently, and an amount of foreign matter stuck in the filters 120 and 220 is small, such that the pressure sensor 30 may determine that it is not necessary to replace the filters 120 and 220. As the differential pressure value decreases, the pressure sensor 30 may determine that air is not blown efficiently, and an amount of foreign matter stuck in the filters 120 and 220 is large such that the pressure sensor 30 may determine that it is necessary to replace the filters 120 and 220. A reference value of the differential pressure value for use in determining whether to replace the filters 120 and 220 may be input to the pressure sensor 30. If a measured differential pressure value is greater than or equal to the reference value, the pressure sensor 30 may determine that it is not necessary to replace the filters 120 and 220. If a measured differential pressure value is less than the reference value, the pressure sensor 30 may determine that it is necessary to replace the filters 120 and 220. Values of the remaining life of the filters 120 and 220, corresponding to the measured differential pressure values, may be calculated and input to the pressure sensor 30, and the pressure sensor 30 may determine the remaining life values, corresponding to the measured differential values, as the remaining life of the filters 120 and 220. In addition to the determination of a replacement timing of the filters 120 and 220 based on the differential pressure values, the pressure sensor 30 may determine the replacement timing of the filters 120 and 220 based on only the measured dynamic pressure value measured through the first terminal 31, which may be performed in the same manner as the determination performed based on the differential pressure values.

In the displaying step S400, information on the replacement timing of the filters 120 and 220, which is determined in the pressure value comparing step S300, may be displayed to the outside. The pressure sensor 30 may be electrically connected by wire to the display 390 disposed on the circulator 300, and the determined information on the replacement timing of the filters 120 and 220 may be transmitted to the display 390. For an effective electric connection between the pressure sensor 30 and the display 390, a PCB (not shown) may be disposed on the inside of the shield body 160 and on the inside of the circulator 300, to relay connection between the pressure sensor 30 and the display 390. The display 390 may display information, transmitted from the pressure sensor 30, to the outside, and the displayed information may indicate the need for replacing the filters 120 and 220, or the remaining life of the filters 120 and 220.

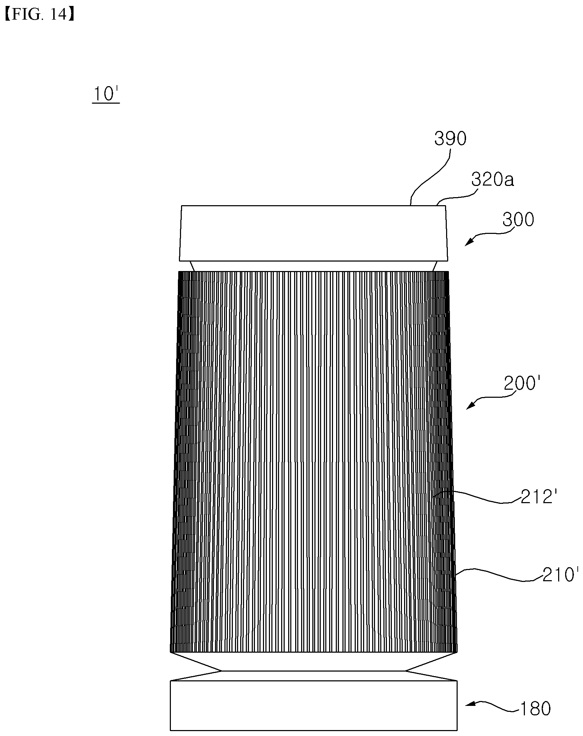

Hereinafter, an air cleaner 10' according to the present disclosure will be described with reference to FIG. 14.

FIG. 14 is a front view of the air cleaner 10', from which the lower blower unit 100 is separated, according to the present disclosure.

The air cleaner 10' according to the present disclosure may be the same as the air cleaner 10 as explained above, except that the lower blower unit 100 is separated. An upper blower unit 200' may be disposed over the base 180, and the circulator 300 may be disposed over the upper blower unit 200'. The internal structure of the base 180, the upper blower unit 200', and the circulator 300 and the description thereof may be the same as explained above.

Air, flowing into the air inlet 212', passes through the filter 220 disposed therein, so that foreign matter may be removed from the air, and then the air may be discharged to the outside through the air outlet 320a of the circulator 300. The sensor assembly 20 may be disposed on a downstream side of the filter 220. The arrangement or structure of the sensor assembly 20 may be the same as explained above, such that the description thereof is omitted.

The sensor assembly 20 may determine a replacement timing of the filter 220 through the pressure sensor 30, and may transmit information on the replacement timing to the display 390, so that the information on the replacement timing may be displayed to the outside through the display 390. The process of displaying the replacement timing of the filter 220 through the display 390 is the same as explained above, such that description thereof will be omitted.

While the present disclosure has been particularly shown and described with reference to preferred embodiments thereof, it will be understood by those skilled in the art that the present disclosure is not limited to those exemplary embodiments and various changes in form and details may be made therein without departing from the scope of the invention as defined by the appended claims.

## Claims

1. An air cleaner (10), comprising:
a case (110) comprising an air inlet (112);
an air outlet (152) formed at an upper part of the case (110); a filter (120) configured to filter out foreign substances contained in air suctioned through the air inlet (112);
a discharge flow passage in the case (110) through which air having passed through the air inlet (112) flows to the air outlet (152);
a blower fan (132) disposed on the discharge flow passage and generating an air flow from the air inlet (112) to the air outlet (152);
a first tube (40) disposed at a downstream side of the filter (120) on the discharge flow passage and having a first hole (41) on the first tube (40) opened toward the filter (120);
a second tube (50) disposed on a downstream side of the filter (120) and having a second hole (51) on the second tube (50) opened toward the blower fan (132); and
a pressure sensor (30) connected to the first tube (40) and the second tube (50), the pressure sensor (30) configured to measure air pressure in the first tube (40) and the second tube (50), respectively,
wherein the first tube (40) and the second tube (50) are disposed between the filter (120) and the blower fan (132).

2. The air cleaner (10'; 10) of claim 1,
wherein the pressure sensor (30) is disposed outside the discharge flow passage.

3. The air cleaner (10) of any one of claims 1 and 2, further comprising an air quality detector (199) configured to measure an amount of foreign substances contained in the air suctioned through the air inlet (112),
wherein the pressure sensor (30) is disposed at a position spaced apart from the air quality detector (199).

4. The air cleaner (10) of any one of claims 1 to 3, wherein the pressure sensor (30) comprises:
a sensor inner surface (30a);
a first terminal (31) protruding from the sensor inner surface (30a), at least a portion of the first terminal (31) being inserted into the first tube (40); and
a second terminal (32) protruding from the sensor inner surface (30a), at least a portion of the second terminal (32) being inserted into the second tube (50).

5. The air cleaner (10) of claim 4, further comprising an adapter (60) that comprises:
a first terminal hole (63) into which the at least portion of the first terminal (31) is inserted;
a second terminal hole (64) into which the at least portion of the second terminal (32) is inserted; and
a base plate (61) comprising an outer adaptor surface (61b) against which the inner sensor surface (30a) of the pressure sensor (30) is pressed.

6. The air cleaner (10) of claim 5, wherein an area of the outer adaptor surface (61b) is larger than an area of the inner sensor surface (30a).

7. The air cleaner (10) of claim 5, wherein the first tube (40) is connected to the pressure sensor at a position spaced upward from a lower end of the adapter (60).

8. The air cleaner (10) of any one of claims 1 to 7, further comprising a filter frame (190) disposed inside the case (110) and supporting the filter (120) to be accommodated therein,
wherein the pressure sensor (30) is disposed at the filter frame (290; 190, 290) and is supported by the filter frame (190).

9. The air cleaner (10) of claim 8, wherein the filter frame (290; 190, 290) comprises:
a support plate (194) supporting the pressure sensor (30); and
a partition wall (195) extending along a circumferential direction of the filter (120) and protruding upward from the support plate (194),
wherein the first tube (40) is arranged to penetrate through the partition wall (195).

10. The air cleaner (10) of claim 9, wherein the partition wall (195) comprises support surfaces (195f, 195g) on which the first tube (40) is mounted.

11. The air cleaner (10) of any one of claims 8 to 10, wherein the filter frame (190) comprises fences (194a, 194b) supporting an outer side surface of the pressure sensor (30) and protruding upward from the support plate (194).

12. The air cleaner (10) of any one of claims 8 to 11,
wherein the filter frame (190) comprises a low boss (194c) protruding from the support plate (194) toward the pressure sensor (30); and
wherein the pressure sensor (30) comprises boss grooves (33, 34) into which the low boss (194c) is inserted.

13. The air cleaner (10) of any one of claims 8 to 12, further comprising a fan housing (130) which is disposed above the filter frame (190), and in which the blower fan (132) is disposed,
wherein the first tube (40) is disposed between the fan housing (130) and the filter frame (190).

14. The air cleaner (10) of claim 13, wherein the fan housing (130) comprises a holding wall (136) extending downwardly and inserted into a cut-out groove (195s) formed at an upper side of the filter frame (190).

15. The air cleaner (10) of any one of claims 13 and 14, wherein the fan housing (230; 130, 230) comprises an upper boss (137) protruding toward the pressure sensor (30) to come into contact the pressure sensor (30).

16. The air cleaner (10) of claim 14, wherein the holding wall (136) of the fan housing (130) is coupled to the cut-out groove (195s) to form a first through hole (195s1) into which the first tube (40) is inserted.

17. The air cleaner (10) of any one of claims 1 to 16, further comprising a display (390) displaying a filter replacement period,
wherein the pressure sensor (30) is connected to the display (390).

18. The air cleaner (10) of any one of claims 1 to 17, wherein the second tube (50) is disposed next to the first tube (40).

19. The air cleaner (10) of claim 8, wherein, when the filter frame (190) is viewed from top, an upper portion of the filter frame (190) has a circular shape,
wherein the first tube (40) and the second tube (50) extend radially from the upper portion of the filter frame (190) toward a center of the filter (120).

20. The air cleaner (10) of claim 19, wherein the filter frame (190) further comprises first grill frames (196a) at an upper portion of the filter frame (190),
wherein the first grill frames (196a) comprise:
a reference frame (196a1) extending in a direction parallel to the front-rear direction, and an intersecting frame (196a2) extending in a direction intersecting the reference frame (196a1),
wherein the first tube (40) and the second tube (50) are disposed closer to the intersection frame (196a2) than the reference frame (196a1).

## Patentansprüche

1. Luftreiniger (10), der aufweist:
ein Gehäuse (110), das einen Lufteinlass (112) aufweist;
einen Luftauslass (152), der an einem oberen Teil des Gehäuses (110) ausgebildet ist;
einen Filter (120), der konfiguriert ist, Fremdstoffe auszufiltern, die in der durch den Lufteinlass (112) angesaugten Luft enthalten sind;
einen Austrittsströmungskanal am Gehäuse (110), durch den Luft, die durch den Lufteinlass (112) gegangen ist, zum Luftauslass (152) strömt;
ein Gebläse (132), das am Austrittsströmungskanal angeordnet ist und einen Luftstrom vom Lufteinlass (112) zum Luftauslass (152) erzeugt;
ein erstes Rohr (40), das an einer Stromabwärtsseite des Filters (120) am Austrittsströmungskanal angeordnet ist und ein erstes Loch (41) am ersten Rohr (40) aufweist, das zum Filter (120) geöffnet ist;
ein zweites Rohr (50), das an einer Stromabwärtsseite des Filters (120) angeordnet ist und ein zweites Loch (51) am zweiten Rohr (50) aufweist, das zum Gebläses (132) geöffnet ist; und
einen Drucksensor (30), der mit dem ersten Rohr (40) und dem zweiten Rohr (50) verbunden ist, wobei der Drucksensor (30) konfiguriert ist, den Luftdruck im ersten Rohr (40) bzw. im zweiten Rohr (50) zu messen,
wobei das erste Rohr (40) und das zweite Rohr (50) zwischen dem Filter (120) und dem Gebläse (132) angeordnet sind.

2. Luftreiniger (10'; 10) nach Anspruch 1,
wobei der Drucksensor (30) außerhalb des Austrittsströmungskanals angeordnet ist.

3. Luftreiniger (10) nach einem der Ansprüche 1 und 2, der ferner einen Luftqualitätsdetektor (199) aufweist, der konfiguriert ist, eine Menge von Fremdstoffen zu messen, die in der durch den Lufteinlass (112) angesaugten Luft enthalten sind,
wobei der Drucksensor (30) an einer Position angeordnet ist, die vom Luftqualitätsdetektor (199) beabstandet ist.

4. Luftreiniger (10) nach einem der Ansprüche 1 bis 3, wobei der Drucksensor (30) aufweist:
eine Sensorinnenfläche (30a);
einen ersten Anschluss (31), der von der Sensorinnenfläche (30a) vorsteht, wobei mindestens ein Teil des ersten Anschlusses (31) in das erste Rohr (40) eingeführt ist; und
einen zweiten Anschluss (32), der von der Sensorinnenfläche (30a) vorsteht, wobei mindestens ein Teil des zweiten Anschlusses (32) in das zweite Rohr (50) eingeführt ist.

5. Luftreiniger (10) nach Anspruch 4, der ferner einen Adapter (60) aufweist, der aufweist:
ein erstes Anschlussloch (63), in das mindestens ein Teil des ersten Anschlusses (31) eingeführt ist;
ein zweites Anschlussloch (64), in das mindestens ein Teil des zweiten Anschlusses (32) eingeführt wird; und
eine Grundplatte (61), die eine äußere Adapterfläche (61b) aufweist, gegen die die Sensorinnenfläche (30a) des Drucksensors (30) gedrückt wird.

6. Luftreiniger (10) nach Anspruch 5, wobei ein Bereich der äußeren Adapterfläche (61b) größer ist als ein Bereich der Sensorinnenfläche (30a).

7. Luftreiniger (10) nach Anspruch 5, wobei das erste Rohr (40) mit dem Drucksensor an einer Position verbunden ist, die von einem unteren Ende des Adapters (60) nach oben beabstandet ist.

8. Luftreiniger (10) nach einem der Ansprüche 1 bis 7, der ferner einen Filterrahmen (190) aufweist, der innerhalb des Gehäuses (110) angeordnet ist und den darin unterzubringenden Filter (120) hält, wobei der Drucksensor (30) am Filterrahmen (290; 190, 290) angeordnet ist und vom Filterrahmen (190) gehalten wird.

9. Luftreiniger (10) nach Anspruch 8, wobei der Filterrahmen (290; 190, 290) aufweist:
eine Halteplatte (194), die den Drucksensor (30) hält; und
eine Trennwand (195), die sich entlang einer Umfangsrichtung des Filters (120) erstreckt und von der Halteplatte (194) nach oben vorsteht,
wobei das erste Rohr (40) so angeordnet ist, dass es die Trennwand (195) durchdringt.

10. Luftreiniger (10) nach Anspruch 9, wobei die Trennwand (195) Halteflächen (195f, 195g) aufweist, an denen das erste Rohr (40) befestigt ist.

11. Luftreiniger (10) nach einem der Ansprüche 8 bis 10, wobei der Filterrahmen (190) Umfriedungen (194a, 194b) aufweist, die eine äußere Seitenfläche des Drucksensors (30) halten und von der Halteplatte (194) nach oben vorstehen.

12. Luftreiniger (10) nach einem der Ansprüche 8 bis 11,
wobei der Filterrahmen (190) einen niedrigen Vorsprung (194c) aufweist, der von der Halteplatte (194) zum Drucksensor (30) vorsteht; und
wobei der Drucksensor (30) Vorsprungsnuten (33, 34) aufweist, in die der niedrige Vorsprung (194c) eingesetzt ist.

13. Luftreiniger (10) nach einem der Ansprüche 8 bis 12, der ferner ein Gebläsegehäuse (130) aufweist, das über dem Filterrahmen (190) angeordnet ist und in dem das Gebläse (132) angeordnet ist,
wobei das erste Rohr (40) zwischen dem Gebläsegehäuse (130) und dem Filterrahmen (190) angeordnet ist.

14. Luftreiniger (10) nach Anspruch 13, wobei das Gebläsegehäuse (130) eine Haltewand (136) aufweist, die sich nach unten erstreckt und in eine ausgeschnittene Nut (195s) eingesetzt ist, die an einer Oberseite des Filterrahmens (190) ausgebildet ist.

15. Luftreiniger (10) nach einem der Ansprüche 13 und 14, wobei das Gebläsegehäuse (230; 130, 230) einen oberen Vorsprung (137) aufweist, der zum Drucksensor (30) vorsteht, um mit dem Drucksensor (30) in Kontakt zu kommen.

16. Luftreiniger (10) nach Anspruch 14, wobei die Haltewand (136) des Gebläsegehäuses (130) mit der ausgeschnittenen Nut (195s) gekoppelt ist, um ein erstes Durchgangsloch (195sl) zu bilden, in das das erste Rohr (40) eingesetzt ist.

17. Luftreiniger (10) nach einem der Ansprüche 1 bis 16, der ferner eine Anzeige (390) aufweist, die eine Filterwechselperiode anzeigt,
wobei der Drucksensor (30) mit der Anzeige (390) verbunden ist.

18. Luftreiniger (10) nach einem der Ansprüche 1 bis 17, wobei das zweite Rohr (50) neben dem ersten Rohr (40) angeordnet ist.

19. Luftreiniger (10) nach Anspruch 8, wobei bei Betrachtung des Filterrahmens (190) von oben ein oberer Abschnitt des Filterrahmens (190) eine kreisförmige Form aufweist, wobei sich das erste Rohr (40) und das zweite Rohr (50) radial vom oberen Abschnitt des Filterrahmens (190) zur Mitte des Filters (120) erstrecken.

20. Luftreiniger (10) nach Anspruch 19, wobei der Filterrahmen (190) ferner erste Gitterrahmen (196a) an einem oberen Abschnitt des Filterrahmens (190) aufweist,
wobei die ersten Gitterrahmen (196a) aufweisen:
einen Referenzrahmen (196a1), der sich in einer Richtung parallel zur Vorne-Hinten-Richtung erstreckt, und einen Kreuzungsrahmen (196a2), der sich in einer Richtung erstreckt, die den Referenzrahmen (196al) kreuzt,
wobei das erste Rohr (40) und das zweite Rohr (50) näher am Kreuzungsrahmen (196a2) als am Referenzrahmen (196a1) angeordnet sind.

## Revendications

1. Purificateur d'air (10), comprenant :
un boîtier (110) comprenant une entrée d'air (112) ;
une sortie d'air (152) formée dans une partie supérieure du boîtier (110) ;
un filtre (120) prévu pour filtrer les substances étrangères contenues dans l'air aspiré par l'entrée d'air (112) ;
un passage de refoulement dans le boîtier (110) par lequel l'air ayant traversé l'entrée d'air (112) s'écoule vers la sortie d'air (152) ;
un ventilateur (132) disposé sur le passage de refoulement et générant un flux d'air de l'entrée d'air (112) vers la sortie d'air (152) ;
un premier tube (40) disposé en aval du filtre (120) sur le passage de refoulement, un premier trou (41) ouvert vers le filtre (120) étant présenté sur le premier tube (40) ;
un deuxième tube (50) disposé en aval du filtre (120), un deuxième trou (51) ouvert vers le ventilateur (132) étant présenté sur le deuxième tube (50) ; et
un capteur de pression (30) raccordé au premier tube (40) et au deuxième tube (50), ledit capteur de pression (30) étant prévu pour mesurer la pression d'air dans le premier tube (40) et le deuxième tube (50), respectivement,
le premier tube (40) et le deuxième tube (50) étant disposés entre le filtre (120) et le ventilateur (132).

2. Purificateur d'air (10' ; 10) selon la revendication 1,
où le capteur de pression (30) est disposé à l'extérieur du passage de refoulement.

3. Purificateur d'air (10) selon la revendication 1 ou la revendication 2, comprenant en outre un détecteur de qualité d'air (199) prévu pour mesurer une quantité de substances étrangères contenues dans l'air aspiré par l'entrée d'air (112),
où le capteur de pression (30) est disposé à un emplacement distant du détecteur de qualité d'air (199).

4. Purificateur d'air (10) selon l'une des revendications 1 à 3, où le capteur de pression (30) comprend :
une surface intérieure de capteur (30a) ;
une première borne (31) faisant saillie de la surface intérieure du capteur (30a), au moins une partie de la première borne (31) étant insérée dans le premier tube (40) ; et
une deuxième borne (32) faisant saillie de la surface intérieure du capteur (30a), au moins une partie de la deuxième borne (32) étant insérée dans le deuxième tube (50),

5. Purificateur d'air (10) selon la revendication 4, comprenant en outre un adaptateur (60) présentant :
un premier trou de borne (63) dans lequel au moins une partie de la première borne (31) est insérée ;
un deuxième trou (64) dans lequel au moins une partie de la deuxième borne (32) est insérée ; et
une plaque de base (61) comprenant une surface extérieure d'adaptateur (61b) contre laquelle est serrée la surface intérieure du capteur (30a) du capteur de pression (30).

6. Purificateur d'air (10) selon la revendication 5, où la surface extérieure d'adaptateur (61b) est plus grande que la surface intérieure du capteur (30a).

7. Purificateur d'air (10) selon la revendication 5, où le premier tube (40) est raccordé au capteur de pression à un emplacement espacé vers le haut d'une extrémité inférieure de l'adaptateur (60).

8. Purificateur d'air (10) selon l'une des revendications 1 à 7, comprenant en outre un cadre de filtre (190) disposé à l'intérieur du boîtier (110) et supportant le filtre (120) à loger dans celui-ci, le capteur de pression (30) étant disposé sur le cadre de filtre (290 ; 190, 290) et supporté par le cadre de filtre (190).

9. Purificateur d'air (10) selon la revendication 8, où le cadre de filtre (290 ; 190, 290) comprend :
une plaque de support (194) supportant le capteur de pression (30) ; et
une paroi de séparation (195) s'étendant dans la direction circonférentielle du filtre (120) et faisant saillie vers le haut depuis la plaque de support (194),
où le premier tube (40) est prévu pour traverser la paroi de séparation (195).

10. Purificateur d'air (10) selon la revendication 9, où la paroi de séparation (195) comprend des surfaces de support (195f, 195g) sur lesquelles le premier tube (40) est monté.

11. Purificateur d'air (10) selon l'une des revendications 8 à 10, où le cadre de filtre (190) comprend des barrières (194a, 194b) supportant une surface latérale extérieure du capteur de pression (30) et faisant saillie vers le haut depuis la plaque de support (194).

12. Purificateur d'air (10) selon l'une des revendications 8 à 11,
où le cadre de filtre (190) comprend un bossage inférieur (194c) faisant saillie de la plaque de support (194) vers le capteur de pression (30) ; et
où le capteur de pression (30) comprend des rainures de bossage (33, 34) dans lesquelles le bossage inférieur (194c) est inséré.

13. Purificateur d'air (10) selon l'une des revendications 8 à 12, comprenant en outre un carter de ventilateur (130) disposé au-dessus du cadre de filtre (190) et dans lequel le ventilateur (132) est installé,
le premier tube (40) étant disposé entre le carter de ventilateur (130) et le cadre de filtre (190).

14. Purificateur d'air (10) selon la revendication 13, où le carter de ventilateur (130) comprend une paroi de maintien (136) s'étendant vers le bas et insérée dans une rainure (195s) découpée sur un côté supérieur du cadre de filtre (190).

15. Purificateur d'air (10) selon la revendication 13 ou la revendication 14, où le carter de ventilateur (230 ; 130, 230) comprend un bossage supérieur (137) faisant saillie vers le capteur de pression (30) de manière à venir en contact avec le capteur de pression (30).

16. Purificateur d'air (10) selon la revendication 14, où la paroi de maintien (136) du carter de ventilateur (130) est raccordée à la rainure découpée (195s) pour former un premier trou traversant (195si) où le premier tube (40) est inséré.

17. Purificateur d'air (10) selon l'une des revendications 1 à 16, comprenant en outre un afficheur (390) affichant une intervalle de remplacement du filtre,
le capteur de pression (30) étant relié à l'écran (390).

18. Purificateur d'air (10) selon l'une des revendications 1 à 17, où le deuxième tube (50) est disposé à côté du premier tube (40).

19. Purificateur d'air (10) selon la revendication 8, où, en vue de dessus du cadre de filtre (190), une partie supérieure du cadre de filtre (190) a une forme circulaire,
où le premier tube (40) et le deuxième tube (50) s'étendent radialement depuis la partie supérieure du cadre de filtre (190) vers le centre du filtre (120).

20. Purificateur d'air (10) selon la revendication 19, où le cadre de filtre (190) comprend en outre des premiers cadres de grille (196a) dans une partie supérieure du cadre de filtre (190),
où les premiers cadres de grille (196a) comprennent :
un cadre de référence (196a1) s'étendant dans une direction parallèle à la direction avant-arrière, et un cadre d'intersection (196a2) s'étendant dans une direction traversant le cadre de référence (196al),
où le premier tube (40) et le deuxième tube (50) sont disposés plus près du cadre d'intersection (196a2) que du cadre de référence (196a1).
